Europäisches Patentamt

(19) European Patent Office

Office européen des brevets

(11) EP 0 828 380 A2

(12) **EUROPEAN PATENT APPLICATION**

(43) Date of publication:
**11.03.1998 Bulletin 1998/11**

(51) Int. Cl.$^6$: **H04N 1/417**

(21) Application number: **97115358.0**

(22) Date of filing: **04.09.1997**

(84) Designated Contracting States:
**AT BE CH DE DK ES FI FR GB GR IE IT LI LU MC NL PT SE**

(30) Priority: **04.09.1996 JP 233815/96**
**19.03.1997 JP 66873/97**

(71) Applicant: **SONY CORPORATION**
**Tokyo (JP)**

(72) Inventor: **Hosaka, Kazuhisa**
**Shinagawa-ku, Tokyo (JP)**

(74) Representative:
**Körber, Wolfhart, Dr. rer.nat. et al**
**Patentanwälte**
**Mitscherlich & Partner,**
**Sonnenstrasse 33**
**80331 München (DE)**

(54) **Encoding device and method, decoding device and method, and recording medium**

(57) A device and method of the present invention aims to improve encoding efficiency. A low level picture is encoded based on predetermined picture elements in an input picture. Picture elements of a middle level picture are half the picture elements of the input picture. The other half of the picture elements are occupied by the low level picture. Because the low level picture has been already encoded, upon encoding the middle level picture, the picture elements which must be actually encoded are only half the picture elements of the middle level picture. Picture elements of a high level picture are an entire of the input picture elements. Half of them are picture elements of the middle level picture or low level picture. Because the low level picture and the middle level picture have been already encoded, the picture elements which must be actually encoded to encode the high level picture are only half the picture elements of the high level picture.

**EP 0 828 380 A2**

**Description**

BACKGROUND OF THE INVENTION

1. Field of the Invention

This invention relates to an encoding device and method capable of efficiently encoding a picture in transmission of, for example, picture signals through a transmission line having various transmission rate, such as analog or digital telephone line and specialized data transmission line or in storage thereof in a storage medium having various capacities, such as optical/magnetic disc and random access memory (RAM), and decoding device and decoding method for decoding the encoded signals, and a recording medium for recording the encoded signals.

2. Description of the Related Art

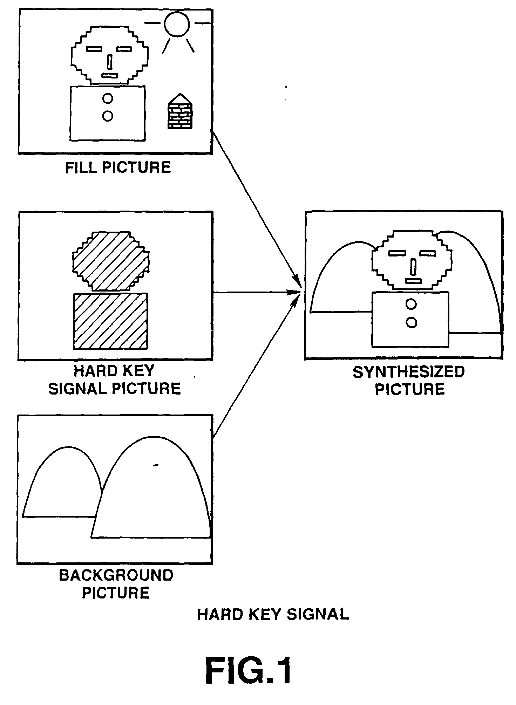

Hard key signal which is one of binary pictures is available. The hard key signal expresses a shape of an object with binary data, depending on inside or outside of that object, as shown in FIG. 1. This hard key signal is used for cutting out an object which attracts attention in the picture along its shape and synthesizing it with other background picture. A picture which is cut out by the hard key signal is called fill picture.

Use of this hard key signal allows to divide a picture into an important object and a background, and encode them by quantizing the important object finely and the background roughly, and then decode both and synthesize by the hard key signal. At this time, if an amount of reduction of codes which is provided by the rough quantizing of the background is used for the fine quantizing of the important object, there is an advantage that the subjective picture quality can be improved with the same amount of code generation. Thus, effective encoding of this hard key signal itself is very important.

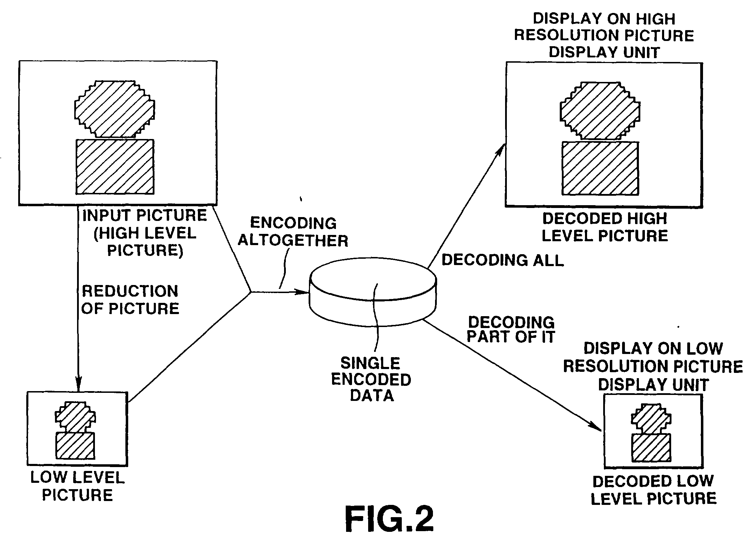

On the other hand, if the input picture is encoded hierarchically in terms of spatial resolution, that is, it is encoded so that a low resolution picture (hereinafter referred to as low level picture) can be obtained by partly decoding and its original resolution picture (hereinafter referred to as high level picture) can be obtained by decoding all, it is possible to correspond to indications on a plurality of display units having various spatial resolutions, as shown in FIG. 2.

That is, the input picture is reduced and created to a low level picture. Next the input picture and low level picture are encoded to single encoded data. By decoding part of the encoded data, a low-resolution low level picture can be obtained and displayed on, for example, a low-resolution display unit. By decoding entire encoded data, a high-resolution high level picture can be obtained and displayed on, for example, a high- resolution display unit.

If the picture is encoded hierarchically, information about the low level picture can be used for encoding the high level picture. Thus, it is possible to reduce an amount of code generation, as compared to encoding individual-resolution pictures separately.

To enable the picture quality and amount of code generation to be controlled depending on the importance for each object in the picture, it is important to encode the hard key signal effectively. Further, it is desirable to encode the picture hierarchically in terms of spatial resolution without reducing the encoding efficiency, so as to enable decoding according to a plurality of resolutions.

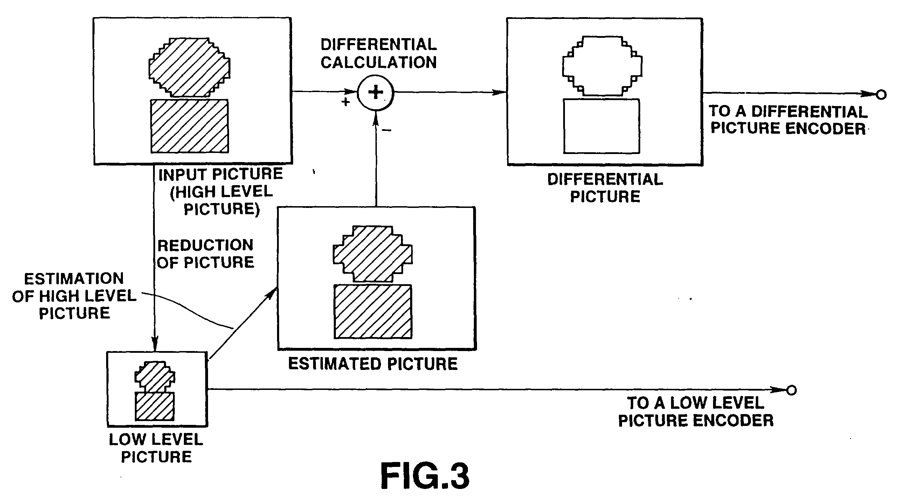

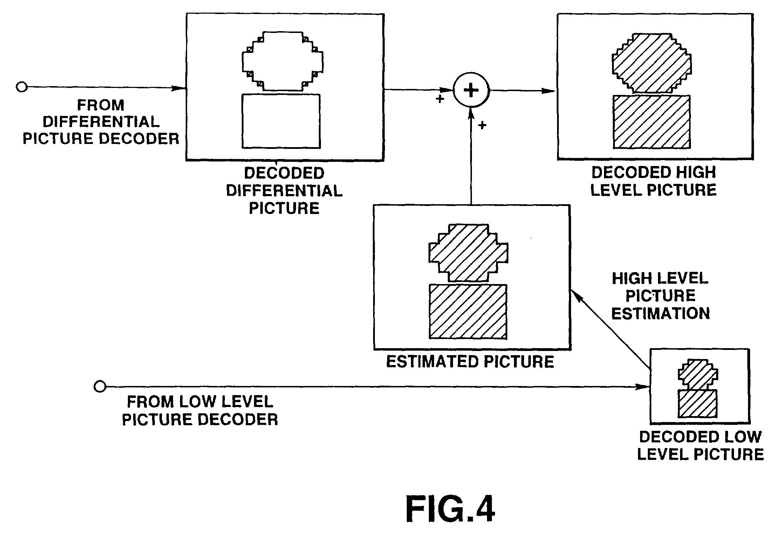

Generally, a basic processing for encoding a picture hierarchically is carried out in the steps shown in FIG. 3. First of all, the input picture is reduced so as to produce a low level picture having a low resolution, and the low level picture is encoded by means of a low level picture encoder. Next, a high level picture input initially is estimated from the low level picture and finally a differential picture between the estimated high level picture and the actual high level picture (input picture) is encoded by means of a differential picture encoder. Then, bit stream encoded by the low level picture encoder and bit stream encoded by the differential picture encoder are multiplexed. As a result, if only part of the bit stream is decoded as shown in FIG. 4, a low level picture having a low resolution can be obtained. If all thereof is decoded, such a bit stream in which the high level picture having the same resolution as the input picture can be obtained is produced.

Usually, following modification is conducted to the basic processing shown in FIGs. 3, 4, and the modified processing is carried out by means of a device shown in FIGs. 5, 6. Namely, because the hard key signal is binary picture, it does not need any differential picture, therefore the differential picture will not be produced. If irreversible encoding is conducted so that a picture before encoding is different from a picture after encoding, a local encoder is provided in the encoding device and a locally decoded picture is used for estimation in the encoding device. Further, an estimated high level picture is not produced, and, for estimation of the high level picture, picture elements of the low level picture will be used as they are.

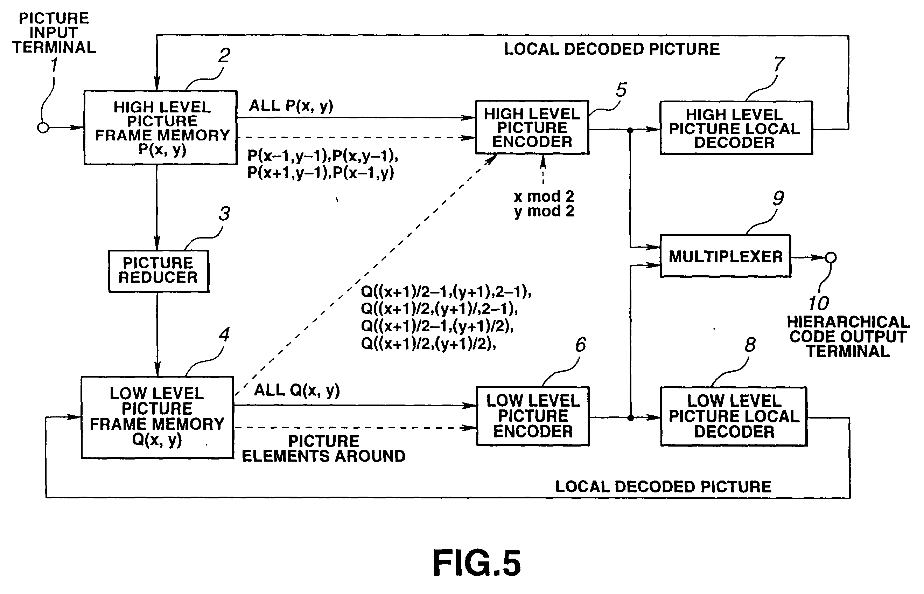

FIG. 5 is a block diagram showing an example of the structure of the encoding device which encodes a picture input from a picture input terminal 1 hierarchically and outputs the encoded codes through an output terminal 10.

A high level picture frame memory 2 holds a picture input through the picture input terminal 1. A picture reducer 3 reduces the picture in the high level picture frame memory 2 by ½ both horizontally and vertically and writes into a low level picture frame memory 4. A low level picture encoding device 6 encodes a picture in the low level picture frame memory 4. A low level picture local decoding device 8 decodes locally a result of decoding by the low level picture encoding device 6 and writes into the low level picture frame memory 4.

As the encoding method by the low level picture encoding device 6, following several methods are conceivable. Encoding by the encoding device shown in FIG. 5 is the same as facsimile (FAX) in that binary picture is encoded. There can be considered: a method based on MMR (modified modified READ), a method based on JBIG (joint bi-level image expert group: for details, see Television Society Bulletin, Vol.48, No.1, pp.65-68(1994)), a method based on chain coding in which a border between inside and outside of an object is encoded depending on its beginning point and direction, a method based on quad tree which omit processing which all the leaves are the same.

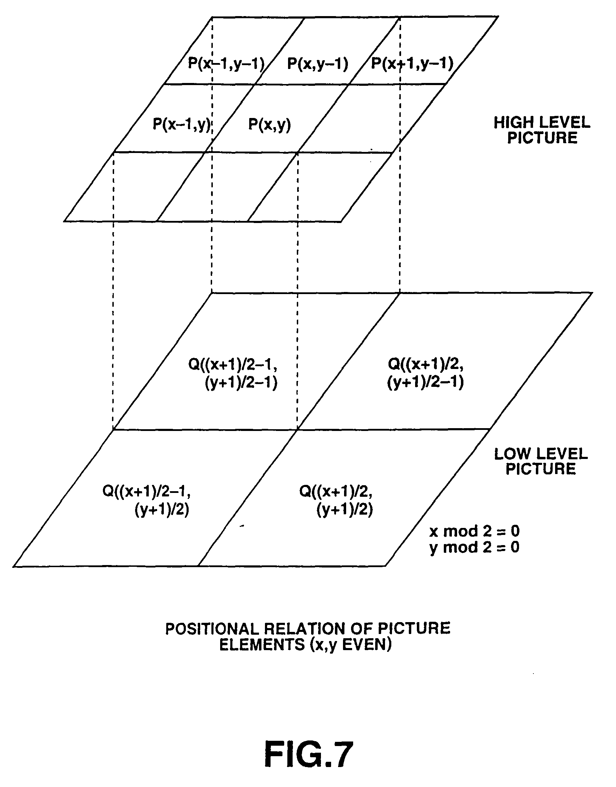

After the low level picture is encoded and decoded by the low level picture encoding device 6 and the low level picture local decoding device 8, a picture on the high level picture frame memory 2 is encoded by the high level picture encoding device 5. At that time, as will be described with reference to FIGs. 7-9, the locally decoded low level picture written into the low level picture frame memory 4 and the high level picture written into the high level picture frame memory 2 are referred to. A result of the encoding is locally decoded by the high level picture local decoding device 7, and written into the high level picture frame memory 2. The high level picture codes output from the high level picture encoding device 5 and the low level picture codes output from the low level picture encoding device 6 are multiplexed by a multiplexer 9 and output from the hierarchical code output terminal 10.

An encoding method by the high level picture encoding device 5 will be described. Assume that respective picture elements of the high level picture are P(x, y) x = {0, 1, · · ·, W-1}, y = {0,1, · · ·, H-1} and respective picture elements of the low level picture are Q(x, y) y = {0, 1, · · ·, W/2 -1}, y = {0, 1, · · ·, H/2-1}. Where x is an amount of deviation from the left end of a picture and y is an amount of deviation from the top end of the picture.

The high level picture encoding device 5 encodes values P(x, y) of respective picture elements of the high level picture. The encoding order is from the smallest one of $x + y \times W$ value, that is, encoding a picture from its upper line to the lower line. In the same line, the encoding is carried out from the left picture element to the right picture element. A code output from the high level picture encoding device 5 is decoded by the high level picture local decoding device 7 in order of the output, and the decoded picture elements are written into the high level picture frame memory 2. The locally decoded picture elements are referred to in encoding of following picture elements.

When the picture element P(x, y) is encoded, the high level picture elements P(x-1, y-1), P(x, y-1), P(x+1, y-1), P(x-1, y), the low level picture elements Q((x+1)/2-1, (y+1)/2-1), Q((x+1)/2, (y+1)/2-1), Q((x+1)/2-1, (y+1)/2), Q((x+1)/2, (y+1)/2) and values x mod 2, y mod 2, which are remainders when each coordinate is divided by 2, are referred to.

The picture elements of the high level picture to be referred to are the picture elements already encoded and decoded by the high level picture encoding device 5 and the high level picture local decoding device 7 respectively, because they are located above or to the left side relative to the picture element P(x, y) to be encoded, and are arranged in positional relationship shown in FIGs. 7-10. The picture elements of the low level picture to be referred to are picture elements located around a position on the low level picture, corresponding to the picture element to be encoded, and located in a positional relationship shown in FIGs. 7-10. As a method of using the picture elements to be referred to upon encoding, a method in which the VLC (variable length code) table is switched over depending on a combination of values of the referred picture element, and a method of adaptive arithmetic encoding of the combination of the referred picture element values as a context (reference information) have been considered.

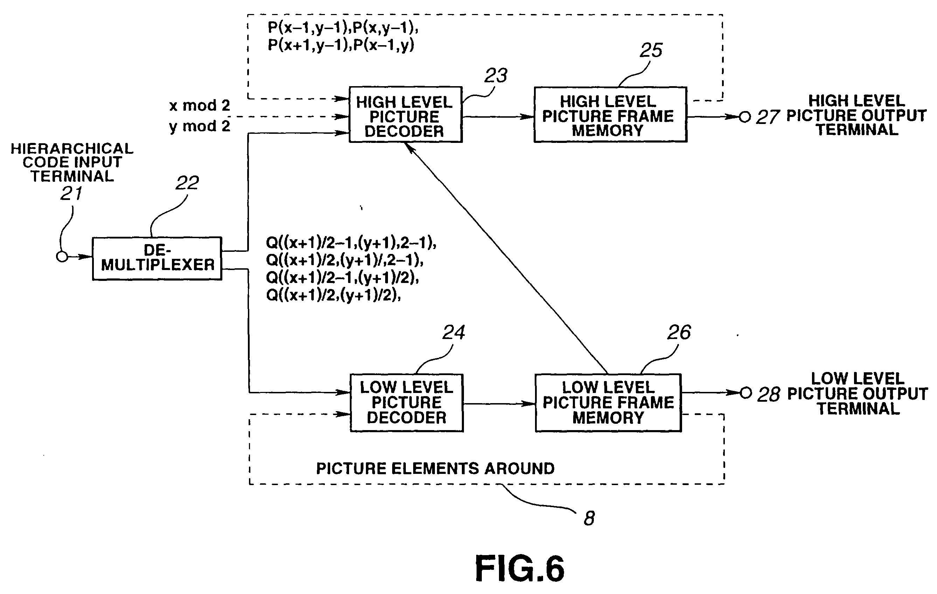

FIG. 6 is a block diagram showing an example of the decoding device which decodes codes encoded hierarchically in terms of spatial resolution and outputs two pictures having different resolutions.

A de-multiplexer 22 de-multiplexes codes encoded hierarchically input from a hierarchical code input terminal 21 and separates to codes for the low level picture and high level picture. A low level picture decoding device 24 decodes codes for low level picture sent from the de-multiplexer 22, according to the values of the picture elements already decoded, supplied from a low level picture frame memory 26. A low level picture frame memory 26 stores low level pictures decoded by the low level picture decoding device 24. The low level pictures stored by the low level picture frame memory 26 is output from a low level picture output terminal 28 and supplied to the high level picture decoding device 23.

The high level picture decoding device 23 decodes codes for the high level picture supplied from the de-multiplexer 22, in accordance with picture elements already decoded, supplied from the high level picture frame memory 25 and values of picture elements already decoded, supplied from the low level picture frame memory 26. The high level picture frame memory 25 stores high level pictures decoded by the high level picture decoding device 23. The high level pictures stored by the high level picture frame memory 25 are output from the high level picture output terminal 27.

Codes encoded hierarchically, input from the hierarchical code input terminal 21 are de-multiplexed by the de-multiplexer 22 and then separated to codes for the low level picture and codes for the high level picture. The codes for the low level picture are decoded by the low level picture decoding device 24 and stored in the low level picture frame memory 26. When a low resolution picture is viewed, a picture in the low level picture frame memory 26 is output from the low level picture output terminal 28.

When a high resolution picture is viewed, codes for the high level picture are decoded by the high level picture decoding device 23 with reference to picture elements already decoded, existing therearound in the same positional relationship as the case of encoding in the encoding device shown in FIG. 5. The decoded picture elements are stored in the high level picture frame memory 25 and referred to in decoding of following picture elements. A picture in the high level picture frame memory 25 is output from the high level picture output terminal 27 and viewed as a high resolution picture.

In this encoding method, if it is structured not to send codes of higher levels, the amount of code generation can be suppressed although the resolution of the picture drops. Thus, a rate control method of depending on whether or not codes of higher levels are sent has been considered.

For example, if a picture is encoded as a low resolution picture, without sending codes of the high level, following two methods are possible; displaying low resolution pictures so as to ensure a spatial scalability and obtaining a low band picture despite its high resolution, by interpolation so as to ensure quality scalability. In the latter case of providing with quality scalability, as a method of determining the value of a picture element to be interpolated, a method for determining it by linear interpolation from picture elements therearound and a method of picking up a value indicated according to a probability table for arithmetic encoding, as having a high generation probability have been considered.

As described above, in the conventional hierarchical encoding in terms of spatial resolution, the low level picture must be created, therefore it is necessary to have a device for producing the low level pictures and a device for storing the low level pictures. As a result, the encoding device becomes complicated. Further, code processing amount increases by an amount corresponding to encoding of the low level picture which must be carried out before encoding of high level pictures. As a result, an amount of generated codes also increases. Still further, upon rate control, the resolution of the picture must be reduced to half, in order to reduce the amount of code generation, thereby picture quality adjustment becoming rough.

Further, in decoding hierarchical codes in terms of spatial resolution, the low level picture must be decoded separately from the high level picture. Thus, it is necessary to have a device for storing the low level pictures, so that the structure of the decoding device becomes complicated. Further, an amount of processing for decoding increases by an amount corresponding to decoding of the low level pictures which must be carried out ahead of the high level pictures.

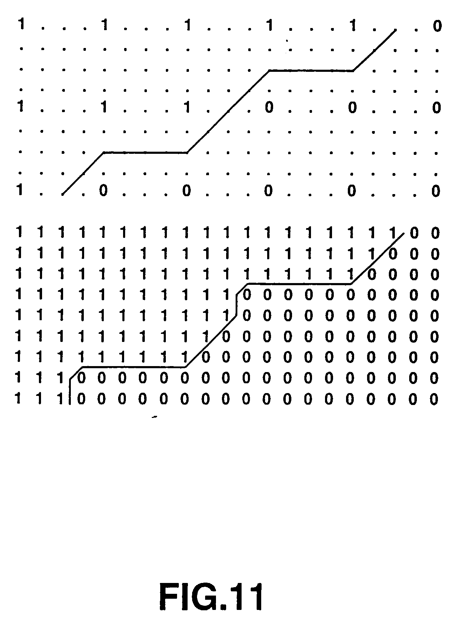

Still further, if interpolation is carried out using for example, a linear interpolation filter, so as to ensure quality scalability by interpolation of low resolution pictures, a not smooth interpolated picture is produced as shown in FIG. 11B, even if a smooth picture as shown by a solid line in FIG. 11A is desired to be obtained. Further, if adaptive arithmetic codes for interpolation processing are used, often the estimation becomes erroneous until learning has been progressed.

## SUMMARY OF THE INVENTION

Accordingly the present invention has been proposed to solve the above described problem. An object of the present invention is to provide an encoding device and method capable of simplifying the structure of the encoding device and a corresponding decoding device, reducing an amount of processing, improving encoding efficiency, raising freedom in rate control, and achieving spatial scalable encoding to ensure an excellent encoding efficiency and quality scalable encoding, and a decoding device and method corresponding to that encoding, and a corresponding recording medium.

According to one aspect of the present invention, there is provided an encoding device including an encoder including:

a first encoding means for encoding a picture of a first level composed of picture elements at a predetermined position on an input picture; and a second encoding means for encoding a picture of a second level which is higher than the first level, the picture of the second level being the input picture and the second encoding means encoding only picture elements excluding the picture elements of the first level picture, of the picture elements of the second level pictures. In the aforementioned encoding device of the present invention, the first encoding means of the encoder encodes the first level picture composed of picture elements at predetermined positions on the input picture. The second encoding means thereof encodes the second level picture which is higher than the first level picture. The second level picture is the input picture and the second encoding means encodes only picture elements excluding the picture elements of the first level picture, of the picture elements of the second level picture. In the encoding device of the present invention, the value of the picture element existing in the center among the picture elements whose values are already calculated is obtained by repeating recursively calculation by interpolation from the picture elements whose values are already calculated, in order from the lowest level.

According to another aspect of the present invention, there is provided an encoding method including the steps of:

encoding a first level picture including picture elements at predetermined positions on an input picture; and encoding, when the input picture as a second level picture which is higher than the first level picture is encoded, only picture elements excluding the picture elements of the first level picture, of the picture elements of the second level picture. According to the encoding method of the present invention, the first level picture is encoded from the picture elements at predetermined positions on the input picture and, when the input picture as the second level picture which is higher than the first level picture is encoded, only the picture elements excluding the picture elements of the first level picture, of the picture elements of the second level picture are encoded.

On the other hand, according to the present invention, there is provided a decoding device including: a first decoding means for decoding a first level picture; and a second decoding means for decoding a second level picture which is higher than the first level, the second decoding means utilizing predetermined picture elements of the first level picture decoded by the first decoding means in order to estimate the second level picture and further utilizing picture elements of the first level picture as part of the second level picture. In this decoding device of the present invention, the first decoding means of the decoder decodes the first level picture. When the second decoding means decodes the second level picture which is higher than the first level picture, it utilizes predetermined picture elements of the first level picture decoded by the first decoding means to estimate the second level picture and further utilizes picture elements of the first level picture as part of the second level picture. In the decoding device of the present invention, the value of the picture element existing in the center among the picture elements whose values are already calculated is obtained by repeating recursively calculation by interpolation from the picture elements whose values are already calculated, in order from the lowest level.

Further, according to the present invention, there is provided a decoding method including the steps of:

decoding a first level picture; and when a second level picture which is higher than the first level is decoded, utilizing predetermined picture elements of the decoded first level picture in order to estimate the second level picture, and further utilizing picture elements of the first level picture as part of the second level picture. According to the decoding method of the present invention, the first level picture is decoded. Then, when the second level picture which is higher than the first level is decoded, the predetermined picture elements of the decoded first level picture are utilized to estimate the second level picture, and the picture elements of the first level picture are utilized as part of the picture elements of the second level picture.

According to a further aspect of the present invention, there is provided a recording medium which encodes a first level picture including picture elements at predetermined positions on an input picture, and records bit stream corresponding to the plural level pictures obtained by encoding only the picture elements excluding the picture elements of the first level picture, of the picture elements of the second level picture, when the input picture as a second level picture which is higher than the first level picture is encoded. In the recording medium of the present invention, the first level picture including picture elements at predetermined positions on the input picture is encoded and, when the input picture as the second level picture which is higher than the first level picture is encoded, bit stream corresponding to the plural level pictures obtained by encoding only the picture elements excluding the picture elements of the first level picture, of the picture elements of the second level picture is recorded.

BRIEF DESCRIPTION OF THE DRAWINGS

FIG. 1 is a view for explaining the hard key signal;
FIG. 2 is a diagram showing a state in which single encoded data corresponds to plural display units having spatial resolution;
FIG. 3 is a diagram showing basic steps of encoding a picture hierarchically in spatial terms;
FIG. 4 is a diagram showing basic steps of decoding a picture encoded hierarchically in spatial terms;
FIG. 5 is a block circuit diagram showing a structure of a conventional encoding device for encoding a picture hierarchically;
FIG. 6 is a block circuit diagram showing a structure of a conventional decoding device for decoding a picture encoded hierarchically;
FIG. 7 is a diagram showing a positional relationship between picture elements to be encode or decoded and the reference picture;

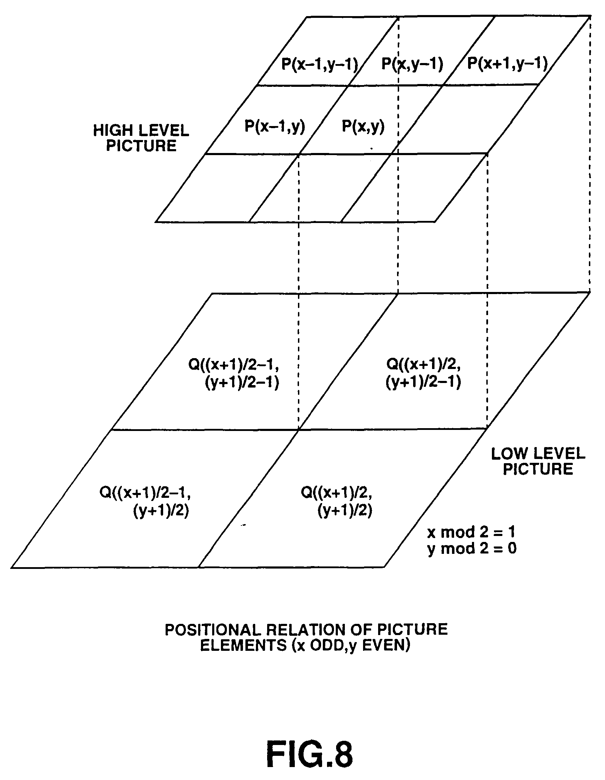

FIG. 8 is a diagram showing a positional relationship between picture elements to be encode or decoded and the reference picture;

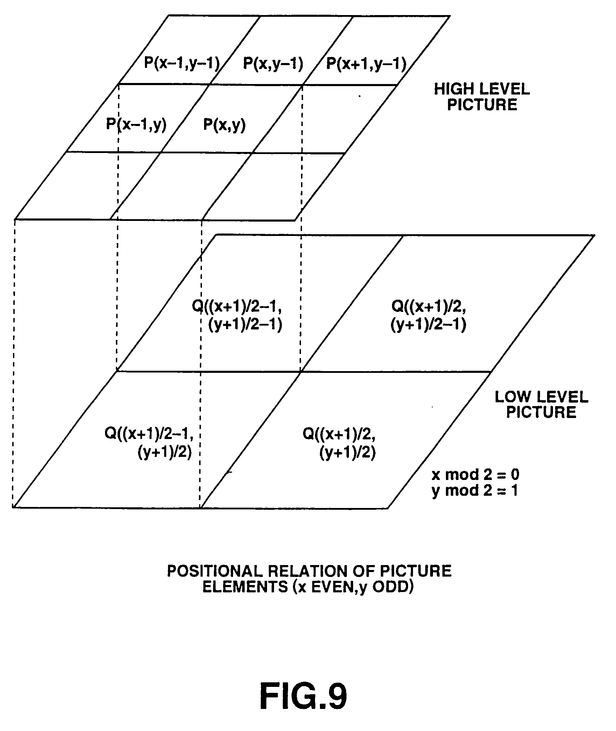

FIG. 9 is a diagram showing a positional relationship between picture elements to be encode or decoded and the reference picture;

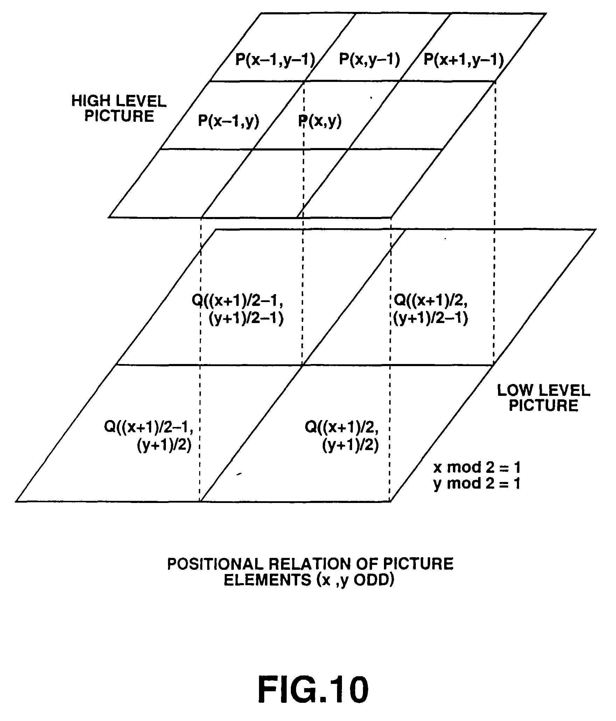

FIG. 10 is a diagram showing a positional relationship between picture elements to be encode or decoded and the reference picture;

FIG. 11 is a diagram for use in explanation of a problem when a linear interpolation filter is used;

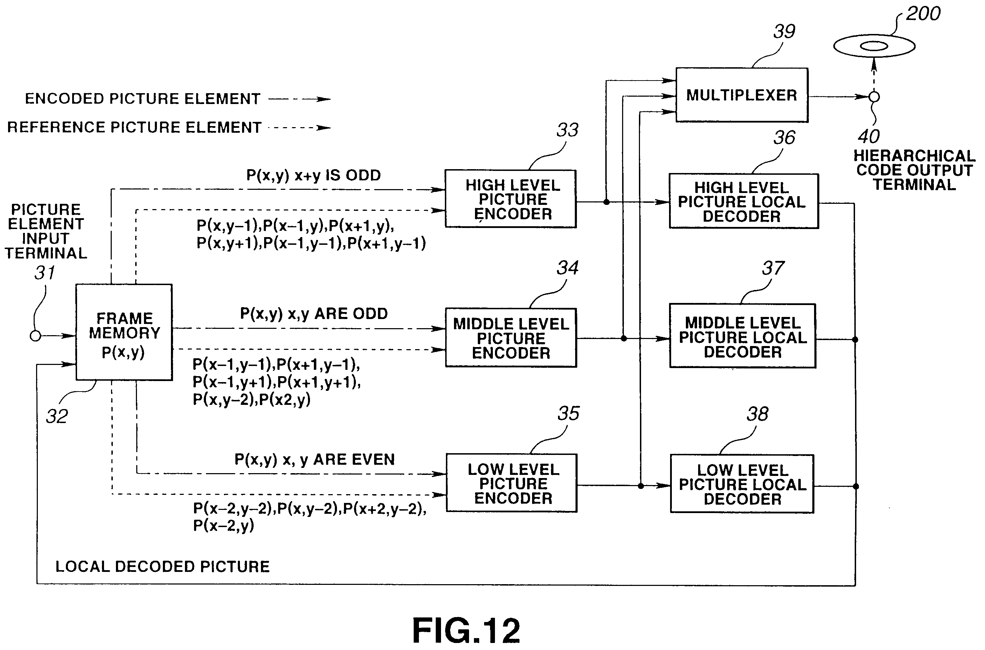

FIG. 12 is a block circuit diagram showing a structure of an encoder according to a first embodiment of the present invention;

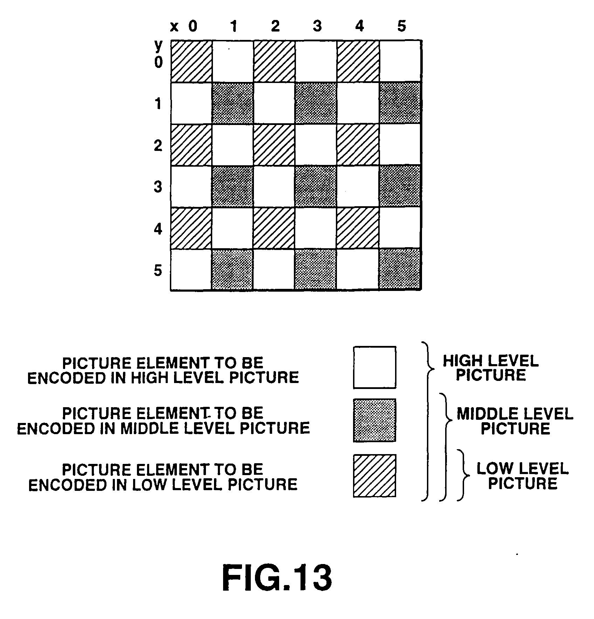

FIG. 13 is a diagram showing a positional relation of picture elements of respective levels;

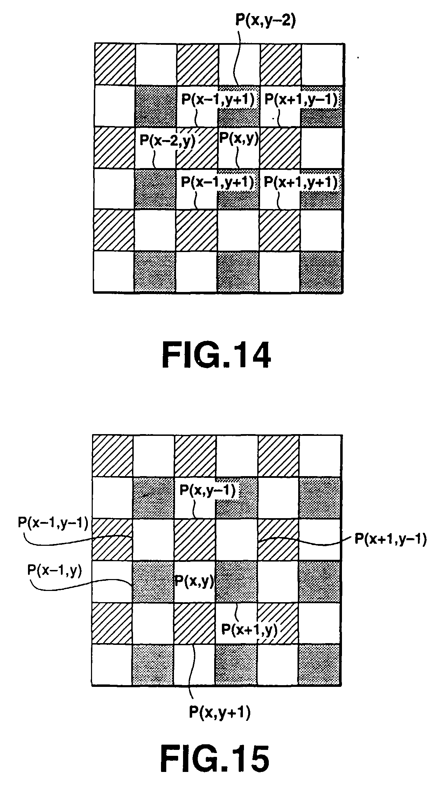

FIG. 14 is a diagram showing a positional relation of the picture elements upon encoding of the middle level picture;

FIG. 15 is a diagram showing a positional relation of the picture elements upon encoding of the high level picture;

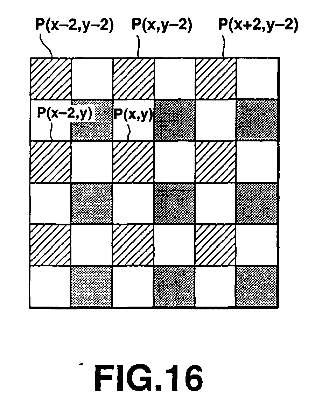

FIG. 16 is a diagram showing a positional relation of the picture elements upon encoding of the low level picture;

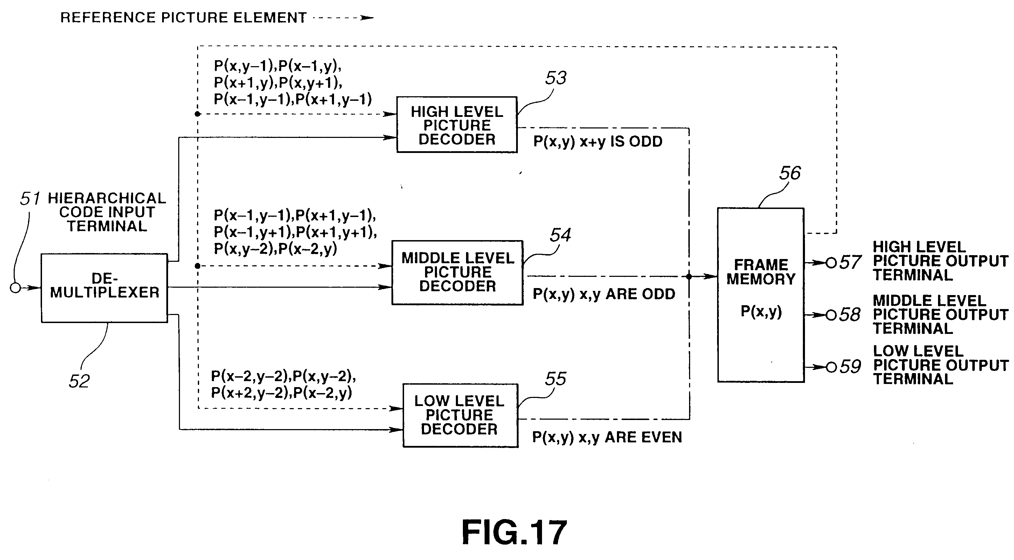

FIG. 17 is a block circuit diagram showing an example of a decoding device according to a first embodiment of the present invention;

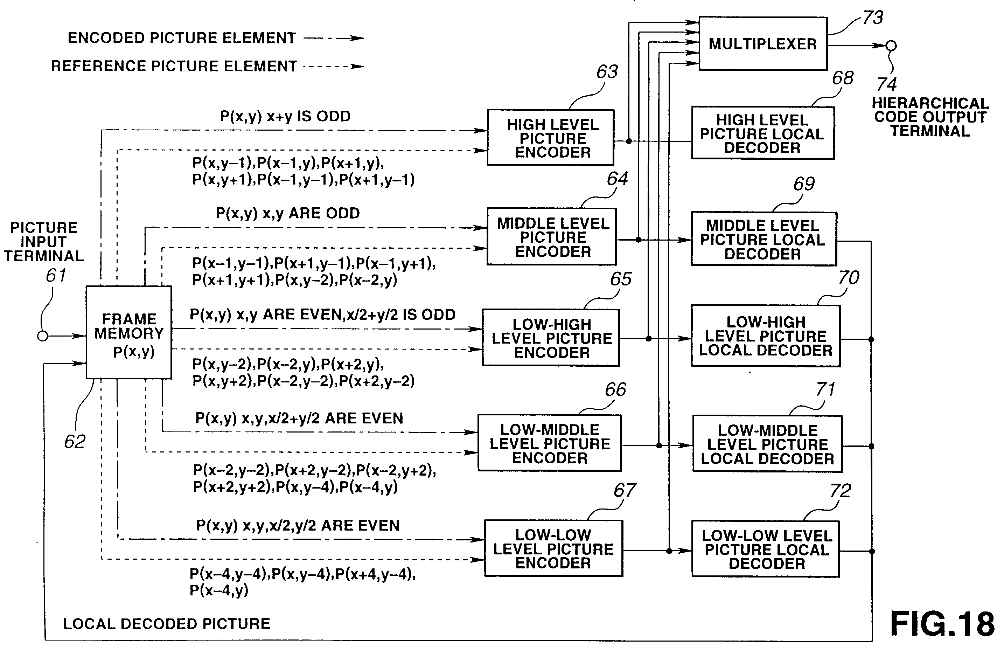

FIG. 18 is a block circuit diagram showing a structure of an encoding device according to a second embodiment of the present invention;

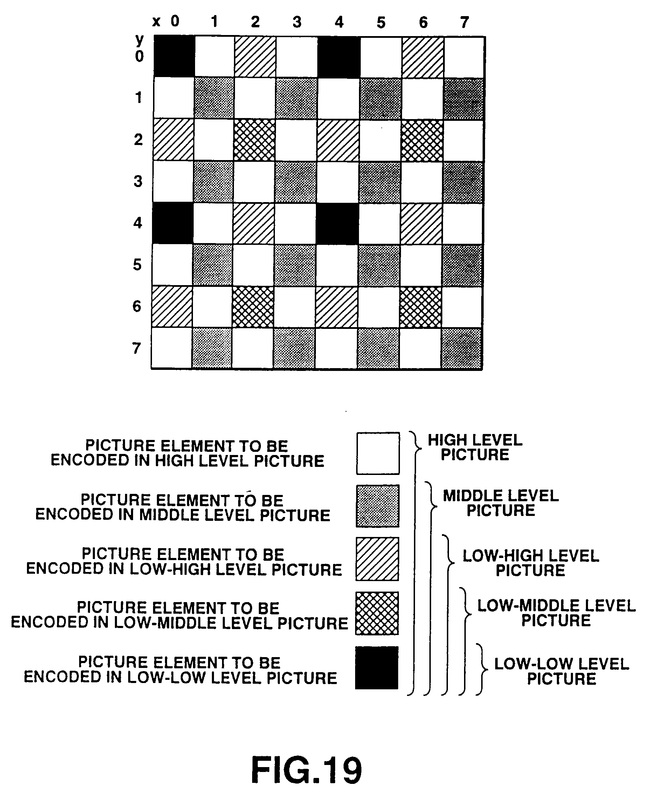

FIG. 19 is a diagram showing a positional relation of picture elements of respective levels in an encoding device shown in FIG. 7;

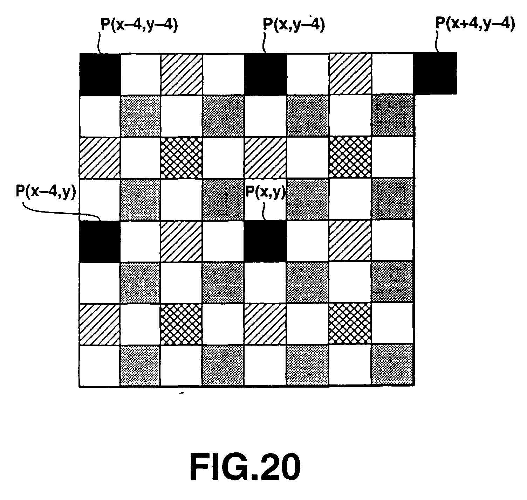

FIG. 20 is a diagram showing a positional relation of picture elements upon encoding of the low-low level picture;

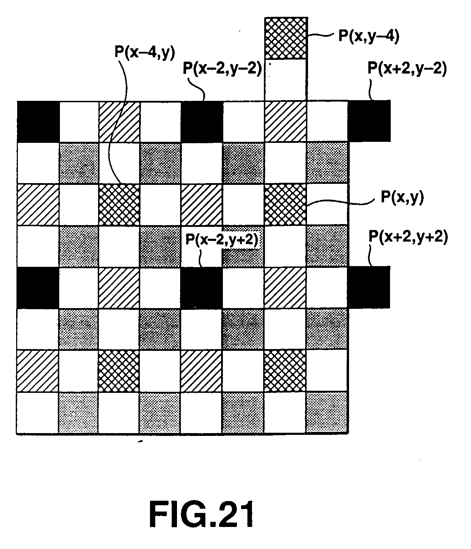

FIG. 21 is a diagram showing a positional relation of picture elements upon encoding of the low-middle level picture;

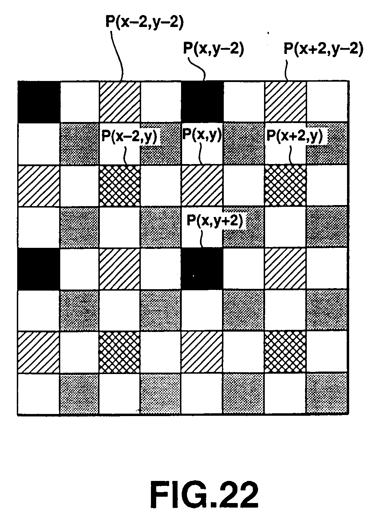

FIG. 22 is a diagram showing a positional relation of picture elements upon encoding of the low-high level picture;

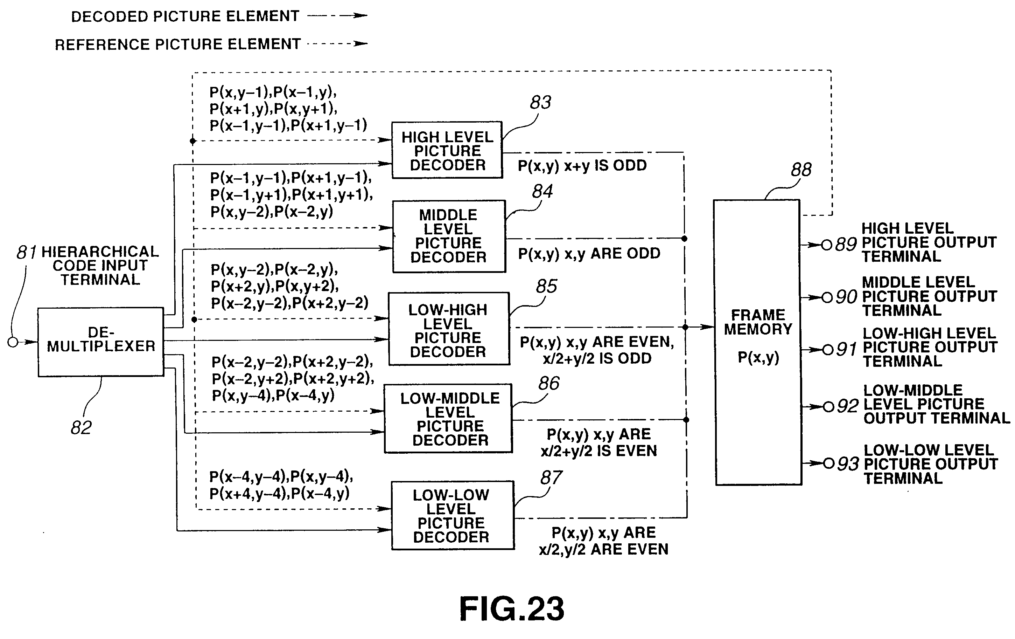

FIG. 23 is a block circuit diagram showing a structure of a decoding device according to a second embodiment of the present invention;

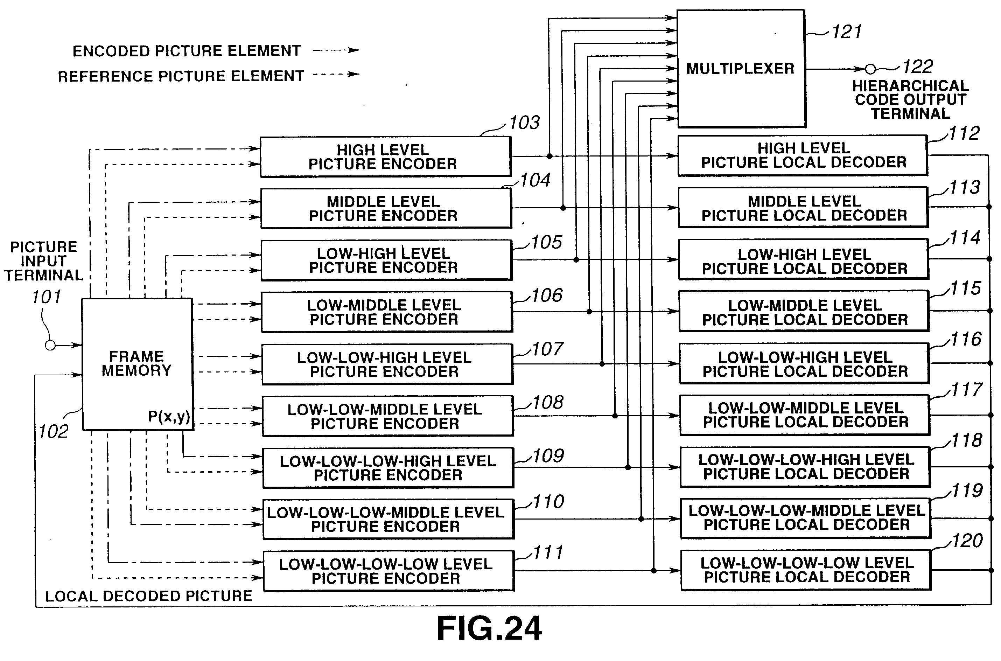

FIG. 24 is a block circuit diagram showing a structure of a encoding device according to a third embodiment of the present invention;

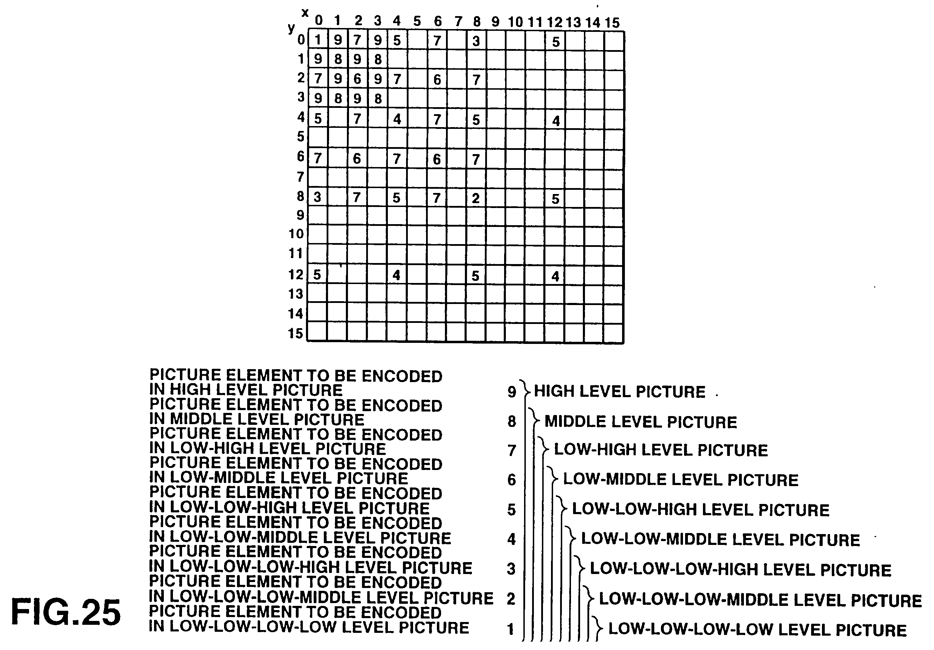

FIG. 25 is a diagram showing a positional relation of picture elements of respective levels in the encoding device shown in FIG. 13;

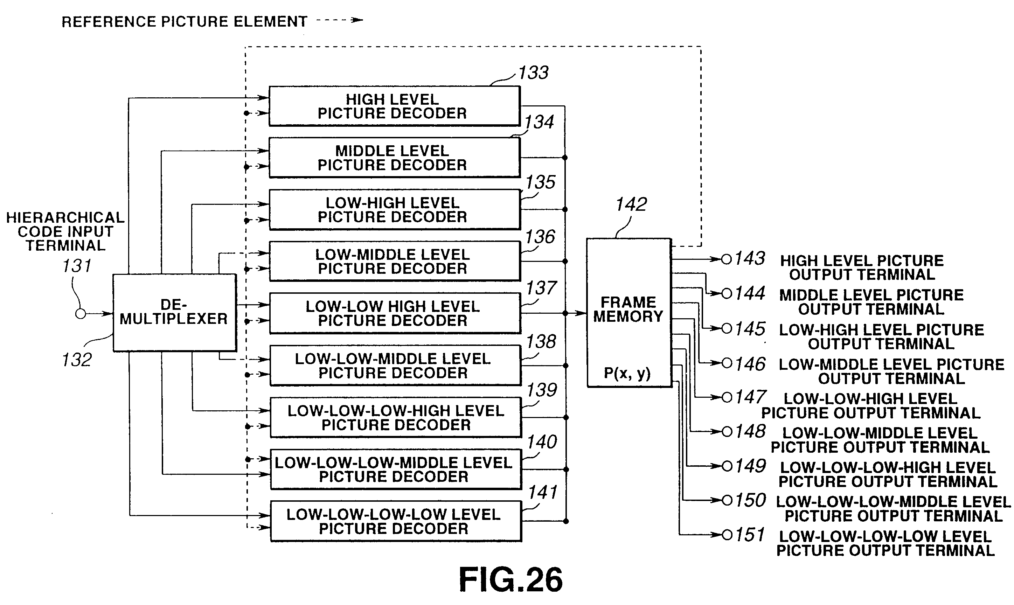

FIG. 26 is a block circuit diagram showing a structure of a decoding device according to a third embodiment of the present invention;

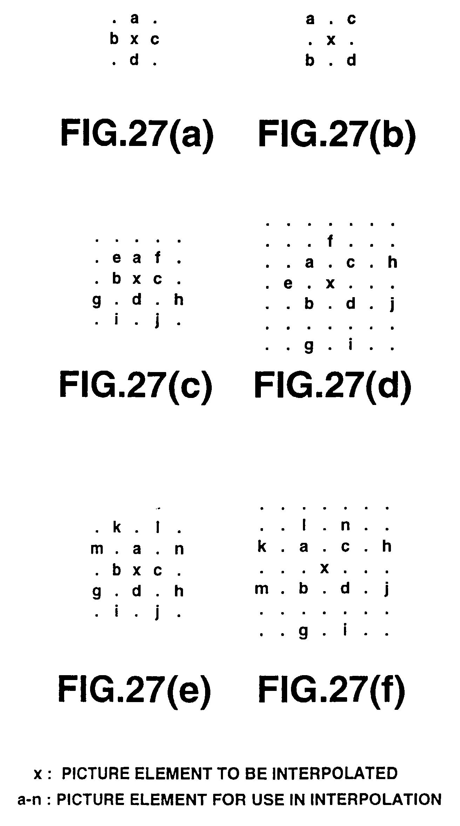

FIG. 27 is a diagram for use in explanation of picture elements to be used upon the fourth and fifth encoding of the present invention;

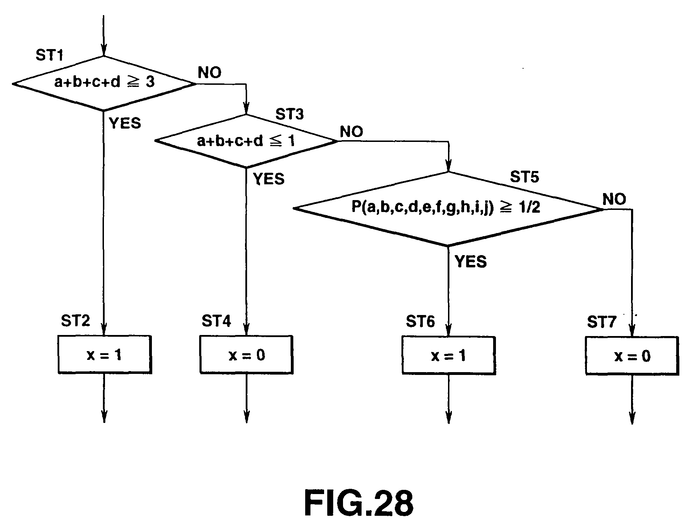

FIG. 28 is a flow chart showing a flow of interpolation processing according to a fourth embodiment of the present invention;

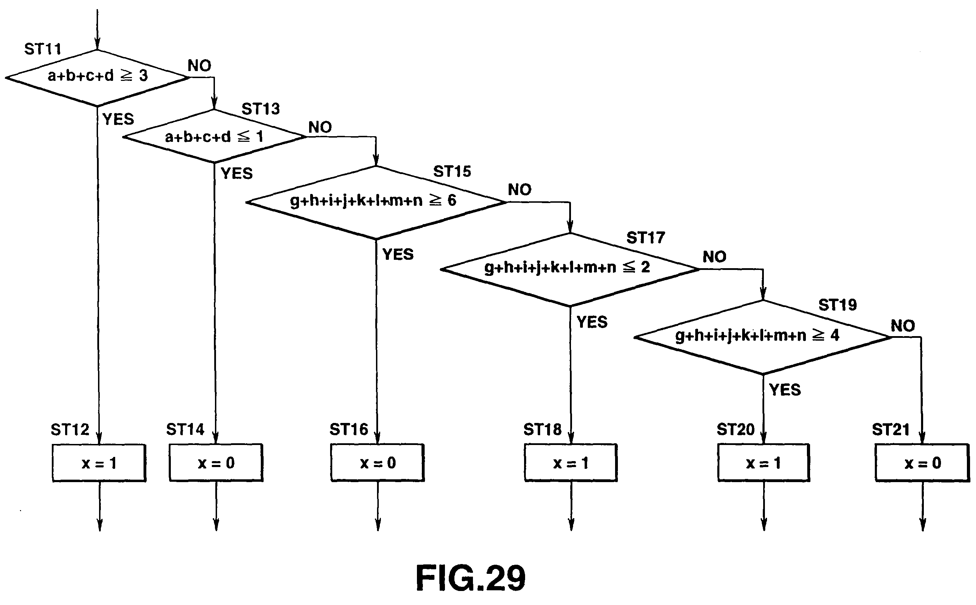

FIG. 29 is a flow chart showing a flow of interpolation processing according to a fifth embodiment of the present invention;

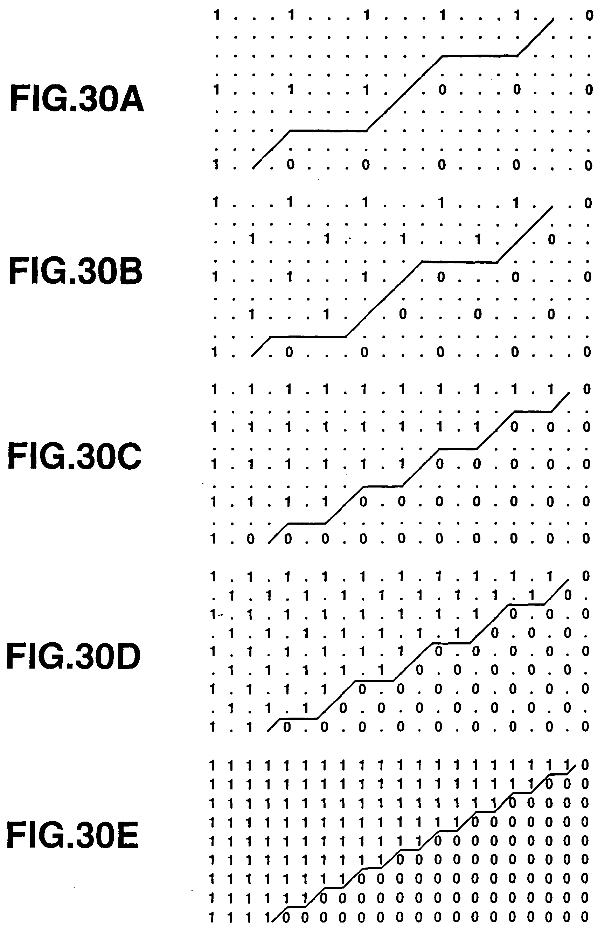

FIG. 30 is a diagram for use in explanation of effects of the interpolation processing according to the fifth embodiment of the present invention;

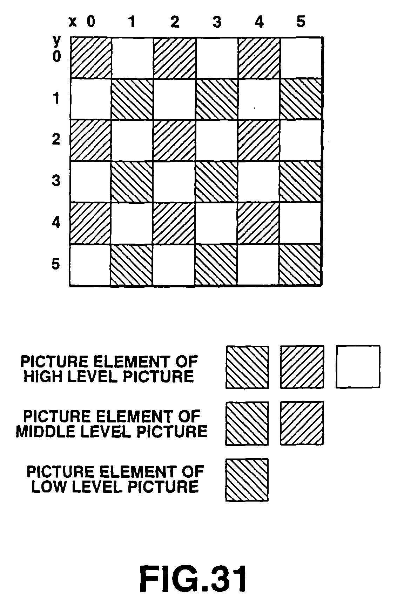

FIG. 31 is a diagram showing other example (corresponding to the positional relation shown in FIG. 2) of picture elements of respective levels, applicable to the respective embodiments of the present invention; and

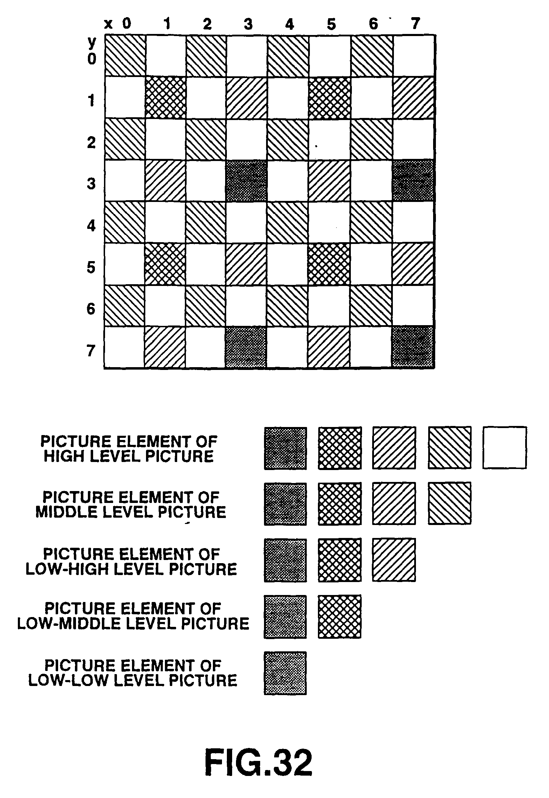

FIG. 32 is a diagram showing still other example (corresponding to the positional relation shown in FIG. 8) of picture elements of respective levels, applicable to the respective embodiments of the present invention;

## DETAILED DESCRIPTION OF THE PREFERRED EMBODIMENTS

Hereinafter, embodiments of the present invention will be described in detail with reference to the accompanying drawings.

Here, assume that the numbers of lateral and horizontal picture elements to be encoded are W and H respectively and both W and H are even numbers. If W and H are not even, a corresponding frame is extended by only a single picture element. The extended picture element value is assumed to be 0. The respective picture elements of a picture are expressed in P(x, y), x = {0, 1, • • •, W-1}, y = {0, 1, • • •, H-1}. x means a displacement from the left end of the picture and y means a displacement from the top end of the picture.

FIG. 12 is a block diagram showing a construction of a first embodiment of an encoder for encoding an input binary picture according to three levels with respect to spatial resolution. FIG. 13 shows a relation between these three levels. As shown in FIG. 13, picture of any level is part of a picture of a higher level. The picture elements of the low level occupy 1/4 of the input picture. They are arranged horizontally and vertically alternately.

The picture elements of the middle level include 1/4 of the picture elements of the input picture and picture elements of the low level picture, so that they are arranged in a checkered pattern. The picture elements of the high level picture include ½ of the picture elements of the input picture and picture elements of the middle level picture so that they coincide with the input picture. Half the picture elements of each level picture are composed of the picture elements of a relatively low level picture.

A frame memory 32 stores a picture input from a picture input terminal 31. A low level picture encoder 35 (first encoding means) encodes a picture element, x and y of which are both even, of the respective picture elements P(x, y). A low level picture local decoder 38 decodes a code encoded by the low level picture encoder 35, and writes that decoded code into the memory frame 32. The middle level picture encoder 34 (second encoding means) encodes a picture element, x and y of which are both odd, of the picture elements P(x, y). The middle level picture local decoder 37 decodes a code output from the middle level picture encoder 34, and writes that decoded code into the frame memory 32. A high level picture encoder 33 (second encoding means) encodes a picture element, x + y of which is odd, of the respective picture elements P(x, y). A high level picture local decoder 36 decodes a code encoded by the high level picture encoder 33 and writes that decoded code into the frame memory 32.

A multiplexer 39 multiplexes codes output from the low level picture encoder 35, the middle level picture encoder 34 and the high level picture encoder 33 and the multiplexed code is output from a hierarchical code output terminal 40.

A first embodiment of the present invention shown in FIG. 12 is largely different from a conventional example shown in FIG. 5 in that the former does not reduce picture size and contains no picture size reducer 3 nor low level picture frame memory 4. Further, the former has three grades for resolution, which is more by one grade than the conventional example.

Now, an operation of the first embodiment will be described. The input picture input from the picture input terminal 31 is stored in the frame memory 32. Then, the low level picture encoder 35 encodes a picture element, x and y of which are both even, of the respective picture elements P(x, y). Any encoding method is available. The output codes are decoded by the low level picture local decoder 38. Then, they are written into the frame memory 32.

After encoding in the low level picture encoder 35 and decoding in the low level picture local decoder 38 are completed, the middle level picture is treated. The middle level picture encoder 34 encodes picture elements, x and y of which are both odd of the picture element P (x, y), successively in order of the value of $x + y \times W$ from a smaller one, that is, in order from a upper line to a lower line and, if in the same line, in order from the left picture element to the right picture element. A code output from the middle level picture encoder 34 is decoded by the middle level picture local decoder 37 in order of the output and then the decoded picture element value is written into the frame memory 32.

Although, as shown in Fig. 13, the number of the middle level picture elements is half that of the input picture elements, half that number is occupied by the picture elements of the low level. Because the picture elements of the low level have been already encoded, only half the number of the middle level picture elements must be actually encoded in order to encode the middle level picture elements.

Detail of the encoding method in the middle level picture encoder 34 will be described below. The picture elements to be referred to when encoding the picture element P(x, y) are picture elements of low levels, that is, picture elements which have been encoded or decoded by the low level picture encoder 35 and the low level picture local decoder 38, P(x-1, y-1), P(x+1, y-1), P(x-1, y+1), P(x+1, y+1) and the picture elements P(x, y-2), P(x-2, y) which have been encoded and decoded by the middle level picture encoder 34 and the middle level picture local decoder 37 because they are located above or to the left side with respect to the picture element P(x, y).

FIG. 14 shows a relation in position of these picture elements. Encoding of these picture element P(x, y) is carried out in accordance with adaptive arithmetic encoding method using these six picture elements as context (reference information). That is, the six binary picture elements are classified to 64 types (square of 2) depending on which each value is 0 or 1. Depending on each of the patterns, a value of the picture element P (x, y) to be encoded is estimated and then that picture element is encoded using arithmetic codes. The estimation of the value for the picture element P(x, y) is carried out in accordance with statistics of the values of the encoded picture elements like in the case of ordinary adaptive arithmetic code.

The middle level picture local decoder 37 decodes adaptive arithmetic codes using the same context as for the middle level picture encoder 34.

Meanwhile, a picture element which is out of the frame, for example P(-1, 0) is handled so that that value is 0. This is the same for a following treatment. It is permissible to assume such a picture element to be the same value as an already encoded picture element which is the nearest that value.

The high level picture elements are total of the input picture elements. Half of them are middle level or low level picture elements. Because the middle level picture elements and the low level picture elements have been already encoded, the number of the picture elements which must be encoded to complete encoding of the high level picture elements is only half the picture elements of the high level.

After encoding in the middle level picture encoder 34 and decoding in the middle level picture local decoder 37 are completed, the high level picture is treated. The high level picture encoder 33 encodes picture elements, x + y of which is odd, of the picture element P(x, y) in order of the value of $x + y \times W$ from a smaller one. A code output from the high level picture encoder 33 is decoded by the high level picture local decoder 36 in order of the output, and then the decoded picture element value is written into the frame memory 32.

Details of the encoding method in the high level picture encoder 33 will be described below. The picture elements to be referred to when encoding the picture element P(x, y) are picture elements of low level or middle level, that is, picture elements which have been encoded or decoded, P(x, y-1), P(x-1, y), P(x+1, y), P(x, y+1) and the picture elements P(x-1, y-1), P(x+1, y-1) which have been encoded and decoded by the high level picture encoder 33 and the middle level picture local decoder 36 because they are located above the picture element P(x, y).

FIG. 15 shows a relation in position of these picture elements. Encoding of these picture element P(x, y) is carried out in accordance with adaptive arithmetic encoding method using these six picture elements as context. That is, the six binary picture elements are classified to 64 types (square of 2) depending on which each value is 0 or 1. Depending on each of the patterns, a value of the picture element P (x, y) to be encoded is estimated and then that picture element is encoded using arithmetic codes. The estimation of the value for the picture element P(x, y) is carried out in accordance with statistics of the values of the encoded picture elements like in the case of ordinary adaptive arithmetic code.

The high level picture local decoder 36 decodes adaptive arithmetic codes using the same context as for the high level picture encoder 33. A relation in position between the picture element to be referred in encoding the middle level picture and the picture element to be referred in encoding the high level picture is in such a relation that if either of them is rotated by 45° and enlarged or reduced, they come to coincide with each other as shown in FIGs. 14, 15. For example, if the respective picture elements shown in FIG. 14 are rotated by 45° clockwise with respect to the picture element (x, y) and reduced by a predetermined magnification ratio, a position shown in FIG. 15 can be obtained.

As described above, the picture element to be referred to when encoding the middle level picture, and the picture element to be referred to when encoding the high level picture are similar in spatial allocation. Thus, it is possible to save memory area in which a table for the arithmetic codes is memorized, by using the same arithmetic codes. Further, the adaptive arithmetic code increases a speed of adaptation to the input picture. However, if there is a sufficient allowance for adaptation to the input picture, it is recommended to use different adaptive arithmetic codes, so that finally optimum condition for each case is learned.

Although it was stated that any encoding method for use in the low level picture encoder 35 was permitted, a following method is available as a method using the same frame as used in the high level and middle level picture encoders 33, 34. This method is common to the middle and high level encoding methods, therefore it has such an advantage that design and production of the encoder are facilitated.

The low level picture encoder 35 encodes the picture element, x and y of which are both even, of the picture element P(x, y), in order of the value of $x + y \times W$ from a smaller one. A code output from the low level picture encoder 35 is decoded by the low level picture local decoder 38, successively in order of the output and the decoded picture element value is written into the frame memory 32.

Details of the encoding method in the low level picture encoder 35 will be described below. Picture elements to be referred to when encoding the picture element P(x, y) are picture elements in low level and picture elements P(x-2, y-2), P(x, y-2), P(x+2, Y-2) and P(x-2, y) which have been encoded and decoded by the low level picture encoder 35 and the low level picture local decoder 38 respectively because they are located above or to the left side of the picture element.

FIG. 16 shows a relation in position of these picture elements. Encoding of these picture element P(x, y) is carried out in accordance with adaptive arithmetic encoding method using these four picture elements as context. That is, the four binary picture elements are classified to 16 types (square of 2) depending on which each value is 0 or 1. Depending on each of the patterns, a value of the picture element P (x, y) to be encoded is estimated and then that picture element is encoded using arithmetic codes. The estimation of the value for the picture element P(x, y) is carried out in accordance with statistics of the values of the encoded picture elements like in the case of ordinary adaptive arithmetic code.

As described above, according to the first embodiment of the present invention shown in FIG. 12, when an input picture is encoded hierarchically with respect to spatial resolution, a pick-up part of the picture elements of a picture on each level is used as a picture element of a picture of a relatively low level. As a result, a device for producing pictures of low level (picture reducer 3) and a device for memorizing pictures of low level (low level picture frame memory 4) are made unnecessary, so that the encoder can be simplified as shown in FIG. 5.

Further, because the picture elements of each level are those of a relatively higher level at the same time, the number of the picture elements which must be encoded on the higher level is reduced to half, thereby reducing processing amount for encoding and code generation amount as compared to a conventional apparatus. Three levels are provided, which is more by a level than the conventional case. Thus, it is possible to adjust the code generation amount to three grades, that is, a grade in which only low level picture is encoded, a grade in which the low level and middle level pictures are encoded, and a grade in which the low level picture, the middle level picture and the high level picture are encoded. As a result, a more flexible rate control is enabled.

Bit stream encoded hierarchically in such a manner is stored in recording medium such as an optical disc 200 or the like.

FIG. 17 is a block diagram showing a construction of the decoder for decoding codes indicating hierarchically binary pictures input as the first embodiment of the present invention.

A de-multiplexer 52 de-multiplexes codes encoded hierarchically input from the optical disc 200 through a hierarchical code input terminal 51 and separate them to respective codes for the low level, middle level and high level. The low level picture decoder 55 (first decoding means) decodes codes for the low level pictures supplied from the de-multiplexer 52. The middle level picture decoder 54 (second decoding means) decodes codes for the middle level picture supplied from the de-multiplexer 52. The high level picture decoder 53 (second decoding means) decodes codes for the high level picture supplied from the de-multiplexer 52.

The frame memory 56 stores decoded picture elements from the high level picture decoder 53, decoded picture elements from the middle level picture decoder 54 and decoded picture elements from the low level picture decoder 55. Then, when high resolution pictures are enjoyed, the picture data including picture elements constituting the high level picture is output from the high level picture output terminal 57. When middle resolution pictures are enjoyed, the picture data including picture elements constituting the middle level picture is output from the middle level picture output terminal 58. When low resolution pictures are enjoyed, the picture data including picture elements constituting the low level picture is output from the low level picture output terminal 59. Further, reference pictures are supplied to the high level picture decoder 53, the middle level picture decoder 54 and the low level picture decoder 55.

A structure of the decoder according to the first embodiment shown in FIG. 17 is largely different from the conventional example shown in FIG. 6 in that the frame memory for storing pictures for the respective levels is shared by the respective levels, so that only a single frame memory is provided. A further point is that there are three levels in terms of resolution, which means that one more level is provided relative to the conventional example. The picture elements of the three levels are arranged in the positional relation shown in FIG. 13.

Then, an operation thereof will be described. Codes hierarchically input through the hierarchical code input terminal 51 are de-multiplexed by means of the de-multiplexer 52 so that they are separated to codes for the low level, middle level and high level pictures. The low level picture codes are decoded by the low level picture decoder 55 and then stored in the frame memory 56. When viewing in low resolution pictures, that stored picture is output through the low level picture output terminal 59.

Decoding of the low level pictures is carried out by referring to already decoded picture elements in the neighborhood, like in the case of the encoder shown in FIG. 12. The picture elements to be referred are picture elements of low level, like in the case of the encoder shown in FIG. 12, that is, P(x-2, y-2), P(x, y-2), P(x + 2, y-2) and P(x-2, y) which have been already decoded because they are located above or to the left side with respect to the picture element P(x, y) to be decoded. The decoded picture elements are stored in the frame memory 56 and referred to in the following decoding of the picture elements.

If a picture having a higher resolution is enjoyed, successively the middle level picture decoder 54 is utilized to encode the middle level pictures. Although the picture elements of the middle level picture are half the picture elements of the high level picture, half that number is occupied by the picture elements of the low level picture. Because the picture elements of the low level picture have been already decoded, the number of the picture elements to be actually encoded in order to decode the middle level picture has only to be half the number of the picture elements of the middle level picture.

Decoding of the middle level pictures is carried out by referring to already decoded picture elements in the neighborhood, like in the case of the encoder shown in FIG. 12. The picture elements to be referred are picture elements of low level, like in the case of the encoder shown in FIG. 12, that is, P(x-1, y-1), P(x+1, y-1), P(x-1, y+1) and P(x+1, y+1) which have been already decoded, and the middle level picture elements which have been already decoded, P(x, y-2), P(x-2, y) because they are located above or to the left side with respect to the picture element P(x, y) to be decoded. The decoded picture elements are stored in the frame memory 56 and referred to in the following decoding of the picture elements. When viewing with pictures having a middle resolution, this picture is output to the middle level picture output terminal 58.

Further, when viewing pictures having a high resolution, the high level picture codes are decoded by means of the high level picture decoder 53. Half the picture elements of the high level picture are the middle level or low level picture elements. Because the middle level pictures and the low level pictures have been already decoded, the number of the picture elements which must be decoded to decode the high level picture has only to be half the number of the picture elements of the high level picture.

Decoding of the codes of the high level picture is carried out by referring to picture elements already decoded in the neighborhood, like the case of the encoder shown in FIG. 12. Like the case of the encoder shown in FIG. 12, the picture elements which must be referred to are the picture elements of the middle level picture or low level picture and already decoded, that is, P(x, y-1), P(x-1, y), P(x+1, y), P(x, y+1) and the picture elements of the same high level, P(x-1, y-1), P(x+1, y-1), which have been already decoded because they are located above the picture element P(x, y) to be decoded. The decoded picture elements are stored in the frame memory 56 and referred to upon decoding of following picture elements. When a picture of a high resolution is viewed, the high level picture composed of all picture elements stored in the frame memory 56 is output from the high level picture output terminal 57.

According to the description above, the adaptive arithmetic codes will be used to encode the pictures. However, it is permissible to use a fixed arithmetic code or use VLC (variable length code) in which a plurality of picture elements are summarized.

In the decoder according to the first embodiment shown in FIG. 17, by forming picture elements of a picture of each level as part of the picture elements of a high level picture, the memory unit for storing the picture of low levels is made unnecessary, thereby simplifying the decoder. Further, because the picture elements decoded in the low levels also belong to higher level picture elements, the number of picture elements which must be decoded in the higher levels can be reduced thereby reducing the processing amount for encoding.

FIG. 18 is a block diagram showing a construction of an encoder according to a second embodiment of the present invention, which utilizes the same structure as the first embodiment shown in FIG. 12, in order to encode the low level pictures.

A frame memory 62 stores a picture input from a picture input terminal 61. A low-low level picture encoder 67 encodes a picture element, x, y, x/2 and y/2 of which are both even, of the respective picture elements $P(x, y)$ composing the input picture. A low-low level picture local decoder 72 decodes a code encoded by the low-low level picture encoder 67, and writes that decoded code into the memory frame 62.

A low-middle level picture encoder 66 encodes a picture element, x, y, x/2 + y/2 of which are both even, of the picture elements $P(x, y)$ composing the input picture. A low-middle level picture local decoder 71 decodes a code output from the low-middle level picture encoder 66, and writes that decoded code into the frame memory 62. A low-high level picture encoder 65 encodes a picture element, x and y of which is odd and x/2 + y/2 of which are odd, of the respective picture elements $P(x, y)$ composing the input picture. A low-high level picture local decoder 70 decodes a code encoded by the low-high level picture encoder 65 and writes that decoded code into the frame memory 62.

A middle level picture encoder 64 encodes a picture element, x and y of which are both odd, of the picture elements $P(x, y)$. A middle level picture local decoder 69 decodes a code output from the middle level picture encoder 64, and writes that decoded code into the frame memory 62. A high level picture encoder 63 encodes a picture element, x + y of which is odd, of the respective picture elements $P(x, y)$. A high level picture local decoder 68 decodes a code encoded by the high level picture encoder 63 and writes that decoded code into the frame memory 62.

A multiplexer 73 multiplexes codes output from the low-low level picture encoder 67, the low-middle level picture encoder 66, the low-high level picture encoder 65, the middle level picture encoder 64, and the high level picture encoder 63, and the multiplexed code is output from a hierarchical code output terminal 74.

The encoder according to the second embodiment shown in FIG. 18 encodes an input picture according to five-level system. A relation of picture elements of the five levels is shown in FIG. 19. According to the second embodiment, picture elements of the low level picture, which are arranged alternately horizontally and vertically as shown in FIG. 13 according to the first embodiment, are divided to the low-high level picture, low-middle picture and low-low picture as shown in FIG. 19. An operation of the encoder according to the second embodiment shown in FIG. 18 is the same as the first embodiment shown in FIG. 12 except that the following three cases replace the encoder (low-level picture encoder 35) for the low level picture according to the second embodiment.

A low-low level picture is encoded according to adaptive arithmetic manner by the low-low level picture encoder 67. The context for use in this case are, when encoding the picture element $P(x, y)$, the following four picture elements, that is, the low-low level picture elements $P(x-4, y-4)$, $P(x, y-4)$, $P(x+4, y-4)$ and $P(x-4, y)$ as shown in FIG. 20.

A low-middle level picture is encoded according to adaptive arithmetic manner by the low-middle level picture encoder 66. The context for use in this case are, when encoding the picture element $P(x, y)$, the following six picture elements, that is, the low-middle level picture elements or the low-low level picture elements $P(x-2, y-2)$, $P(x+2, y-2)$, $P(x-2, y+2)$ and $P(x+2, y+2)$, and the low-middle level picture elements $P(x, y-4)$, $P(x-4, y)$ which have been already encoded as shown in FIG. 21.

A low-high level picture is encoded according to adaptive arithmetic manner by the low-high level picture encoder 65. The context for use in this case are, when encoding the picture element $P(x, y)$, the following six picture elements, that is, the low-middle level picture elements or the low-low level picture elements $P(x, y-2)$, $P(x-2, y)$, $P(x+2, y)$ and $P(x, y+2)$, and the low-high level picture elements $P(x-2, y-2)$, $P(x+2, y-2)$ which have been already encoded as shown in FIG. 22.

As described above, according to the second embodiment as well, the picture elements of a picture of each level are utilized as the picture elements of a picture of relatively higher levels, like the aforementioned first embodiment. Thus, there is an advantage that encoding efficiency is hardly deteriorated due to an increase of the level. Further, even if the number of the levels is increased, the number of the frame memory does not increase.

By using the encoding method based on the first embodiment shown in FIG. 12, as an encoding method for a picture of the lowest level according to the second embodiment, it is possible to increase the number of the levels. Although the number of the levels can be increased in the same manner, if considering in terms of encoding efficiency and ease of the processing, it is appropriate to form the levels of the first embodiment with four levels and then encode the picture elements by dividing them to nine levels.

FIG. 23 is a block diagram showing a construction of a decoder for decoding the low level pictures by using the same system as the first embodiment shown in FIG. 17, as a decoding method according to the second embodiment.

A de-multiplexer 82 de-multiplexes codes encoded hierarchically input from a hierarchical code input terminal 81 and separates them to codes for low-low level, low-middle level, low-high level, middle level and high level pictures. A low-low level picture decoder 87 decodes codes for the low-low level picture supplied from the de-multiplexer 82. A low-middle level picture decoder 86 decodes codes for the low-middle level picture supplied from the de-multiplexer 82. A low-high level picture decoder 85 decodes codes for the low-high level picture supplied from the de-multiplexer 82. A middle level picture decoder 84 decodes codes for the middle level picture supplied from the de-multiplexer 82. A high level picture decoder 83 decodes codes for the high level picture supplied from the de-multiplexer 82.

A frame memory 88 stores decoded picture elements from the high level picture decoder 83, decoded picture elements from the middle level picture decoder 84, decoded picture elements from the low-high level picture decoder 85, decoded picture elements from the low-middle level picture decoder 86, and decoded picture elements from the low-low level picture decoder 87. When a picture of a high resolution is viewed, picture data composed of picture elements for forming the high level picture is output from a high level picture output terminal 89. When a picture of a middle resolution is viewed, picture data composed of picture elements for forming the middle level picture is output from a middle level picture output terminal 90. When a picture of a low resolution is viewed, picture data composed of picture elements for forming the low-high level picture is output from a low-high level picture output terminal 91. Further, picture data composed of picture elements for forming the low-middle level picture is output from a low-middle level picture output terminal 92. Picture data composed of picture elements for forming the low-low level picture is output from a low-low level picture output terminal 93.

Further, reference pictures are supplied to the high level picture decoder 83, middle level picture decoder 84, low-high level picture decoder 85, low-middle level picture decoder 86 and low-low level picture decoder 87.

A decoder according to the second embodiment shown in FIG. 23 decodes codes having five levels in terms of spatial resolution. The five level picture elements are arranged in a positional relationship shown in FIG. 19.

Hierarchically encoded codes which are input from a hierarchical code input terminal 81 are de-multiplexed by means of a de-multiplexer 82 and separated to codes for the respective pictures for the low-low level, low-middle level, low-high level, middle and high level.

An operation of the decoder according to the second embodiment shown in FIG. 23 is the same as that of the first embodiment shown in FIG. 17 except that the decoding portion for the low level picture (low level picture decoder 55) according to the first embodiment shown in FIG. 17 is replaced with the following three cases.

The low-low level picture decoder 87 decodes the adaptive arithmetic codes of the low-low level picture. Like the case of the encoder shown in FIG. 18, the context for use in this case are four picture elements, $P(x-4, y-4)$, $P(x, y-4)$, $P(x+4, y-4)$ and $P(x-4, y)$ of the low-low level picture.

The low-middle level picture decoder 86 decodes the adaptive arithmetic codes of the low-middle level picture. Like the case of the encoder shown in FIG. 18, the context for use in this case are six picture elements, that is, the low-low level picture elements $P(x-2, y-2)$, $P(x+2, y-2)$, $P(x-2, y+2)$ and $P(x+2, y+2)$ and the low-middle level picture elements $P(x, y-4)$, $P(x-4, y)$.

The low-high level picture decoder 85 decodes the adaptive arithmetic codes of the low-high level picture. Like the case of the encoder shown in FIG. 18, the context for use in this case are six picture elements, that is, the low-middle level picture elements or the low-low level picture elements, $P(x, y-2)$, $P(x-2, y)$, $P(x+2, y)$ and $P(x, y+2)$ and the low-high level picture elements $P(x-2, y-2)$, $P(x+2, y-2)$.

As described above, according to the second embodiment, the picture elements of a picture of each level are used as the picture elements of a picture of a relatively higher level, like the case of the first embodiment shown in FIG. 17. Thus, the unit for storing the pictures of the lower levels is made unnecessary thereby simplifying the decoder. Further, because the picture elements decoded on lower levels belong to picture elements of higher levels, the number of the picture elements which must be decoded is decreased, so that the processing amount for encoding can be reduced. Further, although the number of levels is increased, the number of the frame memory may be one.

By using the same method as in the first embodiment shown in FIG. 17, as a decoding method for the lowest code (low-low level picture code) under the second embodiment, it is possible to increase the number of the levels. Although the number of the levels can be increased further, it is appropriate to modify the number of the levels in the first embodiment shown in FIG. 12 to four levels and then decode the codes according to nine levels, in the decoder, just as for the encoder described above, it is appropriate to modify the number of the levels according to the first embodiment shown in FIG. 17 to four levels and encode the codes according to nine levels.

FIG. 24 is a block diagram showing a construction of an encoder according to a third embodiment of the present invention, in which input pictures are encoded according to nine levels.

A frame memory 102 stores a picture input from a picture input terminal 101. A low-low-low-low level picture encoder 111 encodes a picture element, x, y, x/2 and y/2 of which are all even, x/4 and y/4 of which are both even, and further x/8 and y/8 of which are even, of the respective picture elements $P(x, y)$ composing the input picture. A low-low-low-low level picture local decoder 120 decodes a code encoded by the low-low-low-low level picture encoder 111, and writes that decoded code into the memory frame 102.

A low-low-low-middle level picture encoder 110 encodes a picture element, x, y, x/2, y/2 of which are all even, x/4 and y/4 of which are both even, and x/8 + y/8 of which is even, of the picture element $P(x, y)$ composing the input picture. A low-low-low-middle level picture local decoder 119 decodes a code output from the low-low-low-middle level picture encoder 110, and writes that decoded code into the frame memory 102.

A low-low-low-high level picture encoder 109 encodes a picture element, x, y, x/2, y/2 of which are all even, x/4, y/4 of which are even and further x/8+y/8 of which is odd, of the respective picture elements P(x, y) composing the input picture. A low-low-low-high level picture local decoder 118 decodes codes encoded by the low-low-low-high picture encoder 109 and writes the decoded code into the frame memory 102.

A low-low-middle level picture encoder 108 encodes a picture element, x, y, x/2, y/2 of which are all even, x/4+y/4 of which is even, of the respective picture elements P (x, y) composing the input picture. A low-low-middle level picture local decoder 117 decodes a code encoded by the low-low-middle picture encoder 108 and writes the decoded code into the frame memory 102.

A low-low-high level picture encoder 107 encodes a picture element, x, y, x/2, y/2 of which are all even, x/4+y/4 of which is odd, of the respective picture elements P (x, y) composing the input picture. A low-low-high level picture local decoder 116 decodes a code encoded by the low-low-high picture encoder 107 and writes the decoded code into the frame memory 102.

A low-middle level picture encoder 106 encodes a picture element, x, y, x/2+y/2 of which are all even, of the respective picture elements P (x, y) composing the input picture. A low-middle level picture local decoder 115 decodes a code encoded by the low-middle picture encoder 106 and writes the decoded code into the frame memory 102.

A low-high level picture encoder 105 encodes a picture element, x, y of which are both even, x/2+y/2 of which is odd, of the respective picture elements P (x, y) composing the input picture. A low-high level picture local decoder 114 decodes a code encoded by the low-high picture encoder 105 and writes the decoded code into the frame memory 102.

A middle level picture encoder 104 encodes a picture element, x, y of which are both odd, of the picture elements P(x, y). A middle level picture local decoder 113 decodes a code output by the middle level picture encoder 104 and writes the decoded code into the frame memory 102. A high level picture encoder 103 encodes a picture element, x+y of which is odd, of the picture elements P(x, y). A high level picture local decoder 112 decodes a code encoded by the high level picture encoder 103 and writes the decoded code into the frame memory 102.

A multiplexer 121 multiplexes codes of the respective levels output from the high level picture encoder 103, the middle level picture encoder 104, the low-low-high level picture encoder 105, the low-middle picture encoder 106, the low-low-high level picture encoder 107, the low-low-middle level picture encoder 108, the low-low-low-high level picture encoder 109, the low-low-low-middle level picture encoder 110, and the low-low-low-low level picture encoder 111, and outputs from the hierarchical code output terminal 122.

The encoder shown in FIG. 24 encodes an input picture according to nine levels. A relation of picture elements of the nine levels is shown in FIG. 25. According to third embodiment, the picture elements of the low-low level picture as shown in FIG. 19, which are arranged every three elements apart horizontally and vertically according to the second embodiment shown in FIG. 18, are divided to low-low-high level picture (picture element indicated by a number 5), low-low-middle level picture (picture element indicated by a number 4), low-low-low-high level picture (picture element indicated by a number 3), low-low-low-middle picture (picture element indicated by a number 2) and low-low-low-low level picture (picture element indicated by a number 1), as shown in FIG. 25. The picture element of each level appears repeatedly. In an area except left upper portion in FIG. 25, a description of picture element numbers is omitted.

An operation of the encoder according to the third embodiment shown in FIG. 24 is the same as the embodiment shown in FIG. 18 except that the encoding portion for the low-low level picture of the encoder according to the second embodiment is replaced with the following five cases.

A low-low-low-low level picture is encoded according to adaptive arithmetic manner by the low-low-low-low level picture encoder 111. The context for use in this case are, when encoding the picture element P(x, y), the following four picture elements, that is, the low-low-low-low level picture elements P(x-16, y-16), P(x, y-16), P(x+16, y-16) and P(x-16, y).

The low-low-low-middle level picture is encoded according to adaptive arithmetic manner by the low-low-low-middle level picture encoder 110. The context for use in this case are, when encoding the picture element P(x, y), the following six picture elements, that is, the low-low-low-low level picture elements P(x-8, y-8), P(x+8, y-8), P(x-8, y+8) and P(x+8, y+8), and the low-low-low-middle level picture elements P(x, y-16), P(x-16, y) which have been already encoded.

The low-low-low-high level picture is encoded according to adaptive arithmetic manner by the low-low-low-high level picture encoder 109. The context for use in this case are, when encoding the picture element P(x, y), the following six picture elements, that is, the low-low-low-middle level picture elements or the low-low-low-low level picture elements P(x, y-8), P(x-8, y), P(x+8, y) and P(x, y+8), and the low-low-low-high level picture elements P(x-8, y-8), P(x+8, y-8) which have been already encoded.

The low-low-middle level picture is encoded according to adaptive arithmetic manner by the low-low-middle level picture encoder 108. The context for use in this case are, when encoding the picture element P(x, y), the following six picture elements, that is, the low-low-low-low level picture element, low-low-low-middle picture element, or low-low-low-high picture elements P(x-4, y-4), P(x+4, y-4), P(x-4, y+4) and P(x+4, y+4) and the low-low-middle level picture elements P(x, y-8), P(x-8, y) which have been already encoded.

The low-low-high level picture is encoded according to adaptive arithmetic manner by the low-low-high level picture encoder 107. The context for use in this case are, when encoding the picture element P(x, y), the following six picture elements, that is, the low-low-middle level picture element, low-low-low-low picture element, low-low-low-middle level picture element or low-low-low-high picture elements P(x, y-4), P(x-4, y), P(x+4, y) and P(x, y+4), and the low-low-high level picture elements P(x-4, y-4), P(x+4, y-4) which have been already encoded.

FIG. 26 is a block diagram showing a structure of a decoder according to the third embodiment of the present invention, in which decoding of the low-low level picture is carried out using the same system as the structure of the second embodiment shown in FIG. 23, as a decoding method according to the third embodiment.

A de-multiplexer 132 de-multiplexes codes input from a hierarchical code input terminal 131 and encoded hierarchically, and separates them to codes for the low-low-low-low level, low-low-low-middle, low-low-low-high level, low-low-middle, low-low-high level, low-middle level, low-high level, middle level and high level pictures.

A low-low-low-low level picture decoder 141 decodes codes for the low-low-low-low level picture supplied from the de-multiplexer 132. A low-low-low-middle level picture decoder 140 decodes codes for the low-low-low-middle level picture supplied from the de-multiplexer 132. A low-low-low-high level picture decoder 139 decodes codes for the low-low-low-high level picture supplied from the de-multiplexer 132. A low-low-middle level picture decoder 138 decodes codes for the low-low-middle level picture supplied from the de-multiplexer 132.

A low-low-high level picture decoder 137 decodes codes for the low-low-high level picture supplied from the de-multiplexer 132. A low-middle level picture decoder 136 decodes codes for the low-middle level picture supplied from the de-multiplexer 132. A low-high level picture decoder 135 decodes codes for the low- high level picture supplied from the de-multiplexer 132. A middle level picture decoder 134 decodes codes for the middle level picture supplied from the de-multiplexer 132. The high level picture decoder 133 decodes codes for the high level picture supplied from the de-multiplexer 132.

A frame memory 142 stores decoded picture elements from the low-low-low-low level picture decoder 141, decoded picture elements from the low-low-low-middle level picture decoder 140, decoded picture elements from the low-low-low-high level picture decoder 139, decoded picture elements from the low-low-middle level picture decoder 138, decoded picture elements from the low-low-high level decoder 137, decoded picture elements from the low-middle decoder 136, decoded picture elements from the low-high decoder 135, decoded picture element from the middle level decoder 134, and decoded picture element from the high level decoder 133.

When a picture of the lowest resolution of the nine level pictures is viewed, a picture (picture composed of picture elements indicated by a number 1 in FIG. 25) corresponding to respective picture elements output from the low-low-low-low level picture decoder 141 stored in the frame memory 142 is output from a low-low-low-low level picture output terminal 151. When a picture of one-level higher than this picture is viewed, this picture and a picture (picture composed of picture elements indicated by a number 2 in FIG. 25) corresponding to respective picture elements output from the low-low-low-middle level picture decoder 140 stored in the frame memory 142 is output from a low-low-low-middle level picture output terminal 150. When a picture of the highest resolution is viewed, pictures of all the levels are output from a high-level picture output terminal 143.

The frame memory 142 supplies corresponding reference picture elements to the low-low-low-low level picture decoder 141, the low-low-low-middle level picture decoder 140, the low-low-low-high level picture decoder 139, the low-low-middle level picture decoder 138, the low-low-high level picture decoder 137, the low-middle level picture decoder 136, the low-high level picture decoder 135, the middle level picture decoder 134 and the high level picture decoder 133.

The decoder shown in FIG. 23 decodes nine level codes in terms of spatial resolution. The nine levels are in a positional relationship shown in FIG. 25.

Codes input from a hierarchical code input terminal 131 and hierarchically encoded are de-multiplexed by a de-multiplexer 132 and then separated to codes for low-low-low-low level, low-low-low-middle level, low-low-low-high level, low-low-middle level, low-low-high level, low-middle level, low-high level, middle level and high level pictures.

An operation of the decoder according to the third embodiment shown in FIG. 26 is the same as the second embodiment shown in FIG. 23 except that the decoding portion for the low-low level picture (the low-low level picture decoder 87)according to the second embodiment is replaced with the following five cases.

The adaptive arithmetic code of the low-low-low-low level picture is decoded by a low-low-low-low level picture decoder 141. The context for use in this case are, like the encoder shown in FIG. 24, the following four picture elements, that is, the low-low-low-low level picture elements P(x-16, y-16), P(x, y-16), P(x+16, y-16) and P(x-16, y).

The adaptive arithmetic code of the low-low-low-middle level picture is decoded by a low-low-low-middle level picture decoder 140. The context for use in this case are, like the encoder shown in FIG. 24, the following six picture elements, that is, the low-low-low-low level picture elements P(x-8, y-8), P(x+8, y-8), P(x-8, y+8) and P(x+8, y+8), and the low-low-low-middle level picture elements P(x, y-16), P(x-16, y).

The adaptive arithmetic code of the low-low-low-high level picture is decoded by a low-low-low-high level picture decoder 139. The context for use in this case are, like the encoder shown in FIG. 24, the following six picture elements, that is, the low-low-low-middle level picture elements or the low-low-low-low level picture elements P(x, y-8), P(x-8, y), P(x+8, y) and P(x, y+8), and the low-low-low-high level picture elements P(x-8, y-8), P(x+8, y-8).

The adaptive arithmetic code of the low-low-middle level picture is decoded by the low-low-middle level picture decoder 138. The context for use in this case are, like the encoder shown in FIG. 24, the following six picture elements, that is, the low-low-low-low level picture element, low-low-low-middle picture element, or low-low-low-high picture elements P(x-4, y-4), P(x+4, y-4), P(x-4, y+4) and P(x+4, y+4) and the low-low-middle level picture elements P(x, y-8), P(x-8, y).

The adaptive arithmetic code of the low-low-high level picture is decoded by the low-low-high level picture decoder 137. The context for use in this case are, like the encoder shown in FIG. 24, the following six picture elements, that is, the low-low-middle level picture element, low-low-low-low picture element, low-low-low-middle level picture element or low-low-low-high picture elements P(x, y-4), P(x-4, y), P(x+4, y) and P(x, y+4), and the low-low-high level picture elements P(x-4, y-4), P(x+4, y-4).

As described above, according to the third embodiment, the picture elements of a picture of each level are used as the picture elements of a picture of a relatively higher level, like the case of the second embodiment shown in FIG. 23. Thus, the unit for storing pictures of lower levels is made unnecessary thereby simplifying the decoder. Further, because the picture elements decoded on lower levels belong to the picture elements of the higher levels, the number of the picture elements which must be decoded is decreased, so that the processing amount for encoding can be reduced. Further, although the number of levels is increased, the number of the frame memory may be one.

When a binary picture such as hard key signals is encoded hierarchically in terms of spatial resolution, by forming a picture of each level as part of a picture of higher levels, everything can be satisfied by only one frame memory. Further, the unit for reducing a picture is made unnecessary and the structure of the encoder can be simplified. Further, the number of picture elements which must be encoded can be reduced half for pictures of respective levels, thereby reducing the processing amount for encoding and reducing the code generation amount. Further, it is possible to increase the number of the levels thereby making it possible to make more flexible rate control.

Further, when decoding codes, hierarchically encoded from the binary picture such as hard key in terms of spatial resolution by means of the above encoding, by forming the picture of respective levels as part of a picture of a relatively higher level, the number of the frame memory may be one and the structure of the decoder can be simplified, thereby reducing the processing amount of decoding.

Although adaptive arithmetic codes are used in the respective embodiments, it is permissible to use the fixed arithmetic code or the VLC (variable length code) in which a plurality of picture elements are summarized.

Further, by utilizing information of more picture elements as context (reference information) in the respective embodiments, it is possible to improve encoding efficiency. For example, for encoding the middle level pictures, it is recommendable to use totally 10 picture elements as the context, by adding the picture element P(x+3, y-1), P(x+3, y+1), P(x-1, y+3) and P(x+1, y+3), and for encoding the high level pictures, it is recommendable to use totally 10 picture elements as the context, by adding the picture element P(x-2, y+1), P(x+2, y+1), P(x-1, y+2) and P(x+1, y+2). Or other contexts may be used.

In the above respective embodiments, when a picture of each level is encoded, actually, only half the picture elements must be encoded because the other half of them have been already encoded as a picture of a relatively lower level. However, it is possible to interpret that the already encoded picture element will be encoded using itself as the context. At that time, it is assumed that all the picture elements are encoded, however actually encoding half those picture elements produces no generation of code and therefore the situation is the same as if the other half picture elements are encoded.

Next, in encoding according to the first embodiment and the second embodiment, levels higher than a certain level are encoded, as picture elements having a low resolution, without sending any signal, so as to reproduce picture of high resolution by interpolation by the local decoders, thereby quality scalability. An encoding method according to a fourth embodiment of the present invention will be described with reference to FIG. 27. The encoder for realizing an encoding method according to the fourth embodiment is the same as the encoder according to the first embodiment shown in FIG. 12 or according to the second embodiment shown in FIG. 18. However, the fourth embodiment is different from the other embodiments in that the encoders or decoders of respective levels except the lowest level produce interpolating picture elements by using the picture element values already obtained in the lower levels.

As an interpolating method for this, a level in which the picture elements have not been yet determined is obtained by successively interpolating from level lower than that level. That is, in the lower levels, encoding or local decoding or interpolation has been completed, so that the respective picture elements of each of the lower levels are already determined. To obtain picture elements of level higher than that level, interpolation is performed by using four picture elements (already determined) around that target picture element.

There are two ways, as shown in FIGs. 27A, 27B, for arranging four picture elements of lower level, whose values have been already determined, and a picture element which is located in the center of those four picture elements and to be interpolated. In this Figure, x indicates a picture element which can be obtained by interpolation and a, b, c, · ·

•, l, m, n around this x indicate respective picture elements of lower level, which have been already encode, decoded or interpolated. In an example shown in FIG. 27A, encoding, local decoding or interpolation in odd number level has been completed as picture elements of lower level, so that the respective picture elements (picture elements a, b, c, d) around the picture element x to be interpolated have been determined. Likewise, in an example shown in FIG. 27B, because encoding, local decoding or interpolation up to even number levels has been completed as picture elements of lower levels, the respective picture elements (picture elements a, b, c, d) around the picture element x have been already determined. If either FIG. 27A or FIG. 27B is turned by 45° with respect to the other one and enlarged or reduced, they come to coincide with each other. It means that the same interpolation method can be applied to either of them. Although FIG. 27A is picked up for the following description, the same thing can be said for FIG. 27B.

A process for obtaining the center picture element x by interpolation if there exists picture elements a, b, c, d whose values have been already determined, as shown in FIG. 27A is the same procedure as shown in a flow chart shown in FIG. 28.

In the flow chart shown in FIG. 28, first of all, respective values of the picture elements a, b, c, d around the picture element x are summed up in steps ST1 and ST3. If $a + b + c + d$ is over for example, 3, in step ST2, interpolation is made so that the value of the picture element x is 1. If $a + b + c + d$ is smaller than 3 and less than 1, in step ST4, interpolation is made so that the value of the picture element x is 0.

That is, assuming that distances between the picture element x and the respective picture elements a, b, c, d are all the same, in processing of steps ST-ST4, if a result of linear interpolation exceeds a certain upper limit value, it is assumed that the above picture element is 1, and then if it is below the lower limit value, it is assumed that the above picture element is 0.

On the other hand, if the value of the picture element x cannot be determined in the processing of the above steps ST1-ST4, that is, the value of $a + b + c + d$ is smaller than 3 and more than 1, generation probability table for use in arithmetic encoding for the aforementioned encoding according to the first embodiment and second embodiment is used to conduct the interpolation.

Here, the picture elements for use as the reference information for arithmetic encoding in the aforementioned encoding according to the first and second embodiments are a, b, c, d, e, f, g, i, j shown in FIGs. 27C, 27D. The FIGs. 27C, 27D coincide with each other if they are turned by 45° with respect to the other and enlarged or reduced, thereby indicating that the same interpolation method can be applied to both. Then, probability that the picture element x becomes 1 with respect to the respective picture elements of this reference information is investigated with the generation probability table and if that probability is above 1/2, the value of the picture element x is determined to be 1 (x = 1). If that probability is less than 1/2, the value of the picture element x is determined to be 0 (x = 0). That is, in step ST5 shown in FIG. 28, whether or not the probability P (a, b, c, d, e, f, g, h, i, j)that the picture element x becomes 1 with respect to the picture elements a, b, c, d, e, f, g, h, i, j is investigated. If the probability is more than 1/2, in step ST6, the value of the picture element x is determined to be 1(x = 1) by interpolation. If the probability is smaller than 1/2, in step ST7, the value of the picture element x is determined to be 0 (x = 0) by interpolation.

Thus, according to this embodiment, it is possible to obtain such a flexibility that the probability table can be switched over according to the reference information. That is, when clearly there is a deviation among the picture elements existing around or in steps ST1 to ST4, the probability table is not used, thus even if learning for the adaptive arithmetic encoding has not been progressed, not so big an error is caused.

The aforementioned interpolation method can be realized in a method having no probability table such as for VLC (variable length code) encoding, by having the same table as the case of arithmetic encoding. That table only has to be provided with an indication of whether or not the probability is more than 1/2. Combination of the picture elements which will not be used by the table are possible depending on the threshold and not so many combinations of the reference information are necessary. Thus, a table which will become necessary at the time of VLC encoding is small.

At the time of decoding after encoding according to the fourth embodiment as described above is carried out, no codes for levels higher than a certain level are sent. Thus, pictures having a high resolution can be generated by interpolation at the time of decoding so that quality scalable decoding can be carried out. That is, for a level for which codes are sent, those codes are decoded and for levels higher than that level, an interpolation is carried out in the same manner as the flow chart shown in FIG. 28. The decoder according to the fourth embodiment is the same as the decoder according to the first embodiment or the decoder according to the second embodiment. The fourth embodiment is different in that interpolated picture elements are generated using picture element values obtained in a lower level, in a decoder or a local decoder of a higher level. The decoding according to the fourth embodiment can obtain the same effect as the effect described about encoding.

An interpolation method in which the latter half of the interpolation method described in the fourth embodiment is different as the fifth embodiment will be described according to the flow chart shown in FIG. 29.

According to the fifth embodiment, like the fourth embodiment, for levels whose picture elements have not been determined, interpolation is carried out successively from the lower level. For the picture elements a, b, c, d whose values have been determined as shown in FIG. 27A, the steps ST1 to ST4 in FIG. 28 are used. Then if in steps ST11-ST14 in FIG. 29, the value of $a + b + c + d$ exceeds 3, an interpolation is carried out so that the value of the picture element $x$ is 1. If the value is less than 1, interpolation is done so that it is 0.

On the contrary, if the value of the picture element $x$ cannot be determined by processing from step ST11 to step ST14, according to the fifth embodiment, the processing shown in step ST15 to step ST21 is carried out.

That is, in the fifth embodiment, the respective picture elements which are referred to for interpolation are a, b, c, d, g, h, i, j, k, l, m, n, shown in FIGs. 27E, 27F. FIGs. 27E, 27F coincide with each other if either of them is turned by 45° and enlarge or reduced, thereby indicating that the same interpolation method can be applied to both. In the flow chart shown in FIG. 29, for g, h, i, j, k, l, m, n of the picture elements for reference, a, b, c, d, g, h, i, j, k, l, m, n, $g + h + i + j + k + l + l + m + n$ is calculated. Then the following interpolation is carried out. If the result of the calculation is more than 6 like in step ST15, in step ST16, the value of the picture element $x$ is 0 ($x = 0$). If the result of the calculation in step ST19 is 4 or 5, the value of the picture element $x$ is 1 ($x = 1$) like step ST20. Then if the result of the calculation is 3 in step ST19, the value of the picture element $x$ is 0 ($x = 0$) like step ST21. If the value of the calculation is more than 2 in step ST17, the value of the picture element $x$ is 1 ($x = 1$) like step ST18.

According to the interpolation method of the fifth embodiment, when the generation probability table does not exit because the VLC encoding method is used, it is possible to interpolate without having a new table.

A case in which interpolation is carried out successively from lower levels by using the interpolation method according to the fifth embodiment is indicated in FIGs. 30A-30E. That is, FIG. 30A indicates the lowest level and the level becomes successively higher in order of FIGs. 30B, 30C, 30D and 30E. The solid line in FIG. 30 corresponds to smoothness of pictures. As evident in FIG. 30, different from the conventional example shown in FIG. 11, smooth interpolation is carried out.

The structure of the encoder for achieving the encoding method according to the fifth embodiment is the same as the encoder according to the first embodiment shown in FIG. 12 or the encoder according to the second embodiment shown in FIG. 18. This fifth embodiment is different in that the picture encoder or local decoder of each level generates interpolating picture elements by using picture elements already obtained in lower levels as described above.

At the time of decoding after encoding according to the fifth embodiment as described above is carried out, no codes for levels higher than a certain level are sent. Thus, pictures having a high resolution can be generated by interpolation at the time of decoding according to the fifth embodiment so that quality scalable decoding can be carried out. That is, for a level for which codes are sent, those codes are decoded and for levels higher than that level, an interpolation is carried out in the same manner as the flow chart shown in FIG. 29. The decoder according to the fifth embodiment is the same as the decoder according to the first embodiment shown in FIG. 17 or the decoder according to the second embodiment shown in FIG. 23. However, the decoding according to the fifth embodiment is different in that interpolated picture elements are generated using picture element values obtained in a lower level, in a decoder or a local decoder of a higher level. The decoding according to the fifth embodiment can obtain the same effect as the effect described about encoding.

If, in the description of the respective embodiments above, the arrangement of the picture elements of each level is as shown in FIG. 31 and FIG. 32, or the arrangement of the picture elements in FIG. 13 is replaced with that of FIG. 31 and the arrangement of the picture element shown in FIG. 19 is replaced with that shown in FIG. 32, when each macro block is encoded (combined mode in so-called MPEG), the picture element for use as the reference information is often an already encoded picture element or locally decoded picture element. Thus, encoding efficiency is improved.

In the above respective embodiments, various storage medium such as CD-ROM (compact disc ready only memory), DVD (digital versatile disc), optical disc, magnetic disc, magnetic optical disc, RAM, and the like may be used as the recording medium.

According to the encoder and encoding method of the present invention, when a picture of a first level composed of picture elements at a predetermined position on the input picture is encoded and then an input picture as a second level picture which is higher than the first level picture is encoded, only the picture elements excluding the first level picture of the picture elements of the second level picture are encoded. Therefore, when the input picture is hierarchically encoded in terms of spatial resolution, the picture of each level can be made part of the picture of a relatively higher level. Thus, the encoding amount can be reduced and the number of the levels can be increased. As a result, the structure of the encoder can be simplified so that more flexible rate control can be performed.

According to the encoder and encoding method of the present invention, when the binary picture such as the hard key signal is encoded hierarchically in terms of spatial resolution, by making a picture of each level to be part of the picture of a relatively higher level, the number of the frame memory can be one, the picture reducing apparatus can be made unnecessary and the encoder can be simplified. Further, the number of picture elements to be encoded of the picture elements of each level is reduced to half, so that the processing amount and the code generation amount for encoding can be reduced. Still further, the number of the levels can be increased by one so as to achieve more flexible rate control. According to the present invention, by encoding up to a certain level and obtaining higher levels by interpolation according to the present invention, quality scalable encoding which produces excellent quality has been realized.

Further according to the encoder and encoding method according to the present invention, when the picture of the first level is encoded and then the picture of the second level is decoded with respect to the first level, predetermined picture elements of decoded first level picture are used to estimate the second level picture. Then, the picture elements of the first level picture are used as part of the picture elements of the second level. Thus, the structure of the necessary apparatus can be simplified and the processing amount for decoding can be reduced.

That is, according to the decoder of the present invention, when the hierarchical codes of the binary picture such as the hard key signal are decoded in terms of spatial resolution, a picture of each level is made to be part of a picture of a higher level. As a result, the number of the memory frame can be one. The decoder can be simplified and the processing amount for decoding can be reduced.

According to the recording medium of the present invention, the first level picture composed of picture elements at a predetermined position on the input picture is encoded and then the input picture as the second level picture which is higher than the first level picture is encoded, bit stream corresponding to plural levels obtained by encoding only the picture elements excluding the first level picture elements, of the picture elements of the second level picture is recorded. As a result, it is possible to record plural level pictures encoded with high efficiency.

## Claims

1. An encoding device comprising an encoder for hierarchically encoding an input binary picture in terms of spatial resolution and an output portion for outputting an encoded code,
said encoder further comprising:

   a first encoding means (6) for encoding a picture of a first level composed of picture elements at a predetermined position on an input picture; and
   a second encoding means (5) for encoding a picture of a second level which is higher than said first level,
   said picture of the second level being said input picture and said second encoding means (5) encoding only picture elements excluding the picture elements of said first level picture, of the picture elements of said second level pictures.

2. An encoding device according to claim 1 wherein said first encoding means (6) encodes said first level picture in accordance with a value corresponding to at least a picture element composing said first level picture already encoded by said first encoding means (6) and said second encoding means (5) encodes said second level picture in accordance with values corresponding to predetermined picture elements composing said first level picture encoded by said first encoding means and values corresponding to predetermined picture elements composing said second picture already encoded by said second encoding means (5).

3. An encoding device according to claim 1 wherein said first level encoding means (6) for encoding said first level picture is replaced with said encoder.

4. An encoding device according to claim 3 wherein the replacement of said first encoding means (6) with said encoder is carried out repeatedly plural times so that said input picture is encoded to a picture having plural levels.

5. An encoding device according to claim 1 wherein said second encoding means (5) encodes said input picture to a picture having two or more levels.

6. An encoding device according to claim 1 wherein the picture element allocated at a final end in a predetermined range which serves as an encoding unit is a picture element composing said first level picture.

7. An encoding device according to claim 4 wherein, in said first encoding means (6) for encoding a picture of a level higher than said first encoding means (6) for encoding a picture of the lowest level and said second encoding means (5), a value of a picture element located in a center among the picture element whose values are already calculated is obtained by repeating recursively calculation by interpolation from said picture elements whose values are already calculated, in order from the lowest level.

8. An encoding device according to claim 7 wherein, when a value of the picture element located in the center is obtained, multiple estimated values are obtained by linear interpolation from picture elements whose values are already calculated, and if said estimated value is below a lower threshold value, the value of the picture element located in the center is determined to be 0, and if said estimated value is above a upper threshold value, the value of the picture element located in the center is determined to be 1, and if said estimated value exists between said lower threshold value and said upper threshold value, the value of the picture element located in the center is interpolated by referring to the values of other picture elements whose values are already calculated.

9. An encoding device according to claim 7 wherein, when a value of the picture element located in the center is obtained, multiple estimated values are obtained by linear interpolation from picture elements whose values are already calculated, and if said estimated value is below a lower threshold value, the value of the picture element located in the center is determined to be 0, and if said estimated value is above a upper threshold value, the value of the picture element located in the center is determined to be 1, and if said estimated value exists between said lower threshold value and said upper threshold value, the value of the picture element located in the center is interpolated by referring to a table containing generation probability of respective picture elements for use in arithmetic encoding, with a picture element having a higher generation probability.

10. A decoding device comprising a decoder for receiving bit stream obtained by encoding a binary picture hierarchically in terms of spatial resolution and for decoding the input bit stream, and an output portion for outputting a decoded picture, said decoder comprising:

a first decoding means (24) for decoding a first level picture; and
a second decoding means (23) for decoding a second level picture which is higher than said first level, said second decoding means (23) utilizing predetermined picture elements of said first level picture decoded by said first decoding means (24) in order to estimate said second level picture and further utilizing picture elements of said first level picture as part of said second level picture.

11. A decoding device according to claim 10 wherein said first decoding means (24) for decoding said first level picture is replaced with said decoder.

12. An encoding device according to claim 11 wherein the replacement of said first decoding means (24) with said decoder is carried out repeatedly plural times so that said bit stream is decoded to a picture having plural levels.

13. An encoding device according to claim 10 wherein the picture element allocated at a final end in a predetermined range which serves as a decoding unit is a picture element composing said first level picture.

14. An decoding device according to claim 12 wherein, in said first decoding means (24) for decoding a picture of a level higher than said first decoding means (24) for decoding a picture of the lowest level and said second decoding means (23), a value of a picture element located in a center among the picture element whose values are already calculated is obtained by repeating recursively calculation by interpolation from said picture elements whose values are already calculated, in order from the lowest level.

15. A decoding device according to claim 14 wherein, when a value of the picture element located in the center is obtained, multiple estimated values are obtained by linear interpolation from picture elements whose values are already calculated, and if said estimated value is below a lower threshold value, the value of the picture element located in the ceter is determined to be 0, and if said estimated value is above a upper threshold value, the value of the picture element located in the center is determined to be 1, and if said estimated value exists between said lower threshold value and said upper threshold value, the value of the picture element located in the center is interpolated by referring to the values of other picture elements whose values are already calculated.

16. A decoding device according to claim 14 wherein, when a value of the picture element located in the center is obtained, multiple estimated values are obtained by linear interpolation from picture elements whose values are already calculated, and if said estimated value is below a lower threshold value, the value of the picture element located in the center is determined to be 0, and if said estimated value is above a upper threshold value, the value of the picture element located in the center is determined to be 1, and if said estimated value exists between said lower threshold value and said upper threshold value, the value of the picture element located in the center is interpolated by referring to a table containing generation probability of respective picture elements for use in arithmetic encoding, with a picture element having a higher generation probability.

17. An encoding method for encoding an input binary picture hierarchically in terms of spatial resolution, comprising the steps of:

encoding a first level picture comprising picture elements at predetermined positions on an input picture; and

encoding, when said input picture as a second level picture which is higher than said first level picture is encoded, only picture elements excluding the picture elements of said first level picture, of said second level picture.

18. A decoding method for receiving bit stream obtained by encoding a binary picture hierarchically in terms of spatial resolution and for decoding the input bit stream, and an output portion for outputting a decoded picture, said decoding method comprising the steps of:

decoding a first level picture; and
when a second level picture which is higher than said first level is decoded, utilizing predetermined picture elements of said decoded first level picture in order to estimate said second level picture and further utilizing picture elements of said first level picture as part of said second level picture.

19. A recording medium for recording an output from the encoding device comprising:

an encoder for encoding an input binary picture hierarchically in terms of spatial resolution; and an output portion for outputting encoded codes,
said recording medium encoding a first level picture comprising picture elements at predetermined positions on an input picture, and recording bit stream corresponding to the plural level pictures obtained by encoding only the picture elements excluding the picture elements of said first level picture, of said second level picture, when said input picture as a second level picture which is higher than said first level picture is encoded.

20. A binary picture interpolating device for receiving the binary picture and outputting a high resolution binary picture obtained by interpolating the input picture in terms of spatial resolution,
said binary picture interpolating device comprising:

a storing means for storing picture elements whose values are already calculated; and
an interpolating means for obtaining a value of a picture element located in the center among picture elements whose values are already calculated, by repeating calculation recursively by interpolation from the picture elements whose values are already calculated and stored in said storing means.

21. A binary picture interpolating device according to claim 20 wherein, said interpolating means, when a value of the picture element located in the center is obtained, obtains multiple estimated values by linear interpolation from picture elements whose values are already calculated, and if said estimated value is below a lower threshold value, determines the value of the picture element located in the center to be 0, and if said estimated value is above a upper threshold value, determines the value of the picture element located in the center to be 1, and if said estimated value exists between said lower threshold value and said upper threshold value, interpolates the value of the picture element located in the center by referring to the values of other picture elements whose values are already calculated.

22. A binary picture interpolating device according to claim 20 wherein, said interpolating means, when a value of the picture element located in the center is obtained, obtains multiple estimated values by linear interpolation from picture elements whose values are already calculated, and if said estimated value is below a lower threshold value, determines the value of the picture element located in the center to be 0, and if said estimated value is above a upper threshold value, determines the value of the picture element located in the center to be 1, and if said estimated value exists between said lower threshold value and said upper threshold value, interpolates the value of the picture element located in the center by referring to a table containing generation probability of respective picture elements for use in arithmetic encoding, with a picture element having a higher generation probability.

FILL PICTURE

HARD KEY
SIGNAL PICTURE

BACKGROUND
PICTURE

SYNTHESIZED
PICTURE

HARD KEY SIGNAL

# FIG.1

FIG.2

DIFFERENTIAL
CALCULATION

TO A DIFFERENTIAL
PICTURE ENCODER

DIFFERENTIAL
PICTURE

INPUT PICTURE
(HIGH LEVEL
PICTURE)

REDUCTION
OF PICTURE

ESTIMATION
OF HIGH LEVEL
PICTURE

ESTIMATED PICTURE

LOW LEVEL
PICTURE

TO A LOW LEVEL
PICTURE ENCODER

**FIG.3**

EP 0 828 380 A2

FIG.4

**FIG.5**

EP 0 828 380 A2

FIG.6

POSITIONAL RELATION OF PICTURE
ELEMENTS (x,y EVEN)

# FIG.7

HIGH LEVEL
PICTURE

P(x−1,y−1)  P(x,y−1)  P(x+1,y−1)

P(x−1,y)  P(x,y)

LOW LEVEL
PICTURE

Q((x+1)/2−1,
(y+1)/2−1)

Q((x+1)/2,
(y+1)/2−1)

Q((x+1)/2−1,
(y+1)/2)

Q((x+1)/2,
(y+1)/2)

x mod 2 = 1
y mod 2 = 0

POSITIONAL RELATION OF PICTURE
ELEMENTS (x ODD,y EVEN)

# FIG.8

P(x−1,y−1)   P(x,y−1)   P(x+1,y−1)

HIGH LEVEL
PICTURE

P(x−1,y)   P(x,y)

Q((x+1)/2−1,
(y+1)/2−1)

Q((x+1)/2,
(y+1)/2−1)

LOW LEVEL
PICTURE

Q((x+1)/2−1,
(y+1)/2)

Q((x+1)/2,
(y+1)/2)

x mod 2 = 0
y mod 2 = 1

POSITIONAL RELATION OF PICTURE
ELEMENTS (x EVEN,y ODD)

# FIG.9

POSITIONAL RELATION OF PICTURE
ELEMENTS (x ,y ODD)

# FIG.10

```
1 . . . 1 . . . 1 . . . 1 . . . 1 . ⟋ . 0
. . . . . . . . . . . . . . . . . . . . .
. . . . . . . . . . . . . . . . . . . . .
. . . . . . . . . . . . . . . . . . . . .
1 . . . 1 . . . 1 . ⟋ . 0 . . . 0 . . . 0
. . . . . . . . . . . . . . . . . . . . .
. . . . . . . . . . . . . . . . . . . . .
. . . . . . . . . . . . . . . . . . . . .
1 . ⟋ . 0 . . . 0 . . . 0 . . . 0 . . . 0

1 1 1 1 1 1 1 1 1 1 1 1 1 1 1 1 1 1 1 0 0
1 1 1 1 1 1 1 1 1 1 1 1 1 1 1 1 1 1 0 0 0
1 1 1 1 1 1 1 1 1 1 1 1 1 1 1 1 1 0 0 0 0
1 1 1 1 1 1 1 1 1 1 1 0 0 0 0 0 0 0 0 0 0
1 1 1 1 1 1 1 1 1 1 1 0 0 0 0 0 0 0 0 0 0
1 1 1 1 1 1 1 1 1 1 0 0 0 0 0 0 0 0 0 0 0
1 1 1 1 1 1 1 1 1 0 0 0 0 0 0 0 0 0 0 0 0
1 1 1 0 0 0 0 0 0 0 0 0 0 0 0 0 0 0 0 0 0
1 1 1 0 0 0 0 0 0 0 0 0 0 0 0 0 0 0 0 0 0
```

# FIG.11

EP 0 828 380 A2

ENCODED PICTURE ELEMENT ——·—➤

REFERENCE PICTURE ELEMENT ·-----➤

P(x,y) x+y IS ODD

P(x,y-1),P(x-1,y),P(x+1,y),
P(x,y+1),P(x-1,y-1),P(x+1,y-1)

PICTURE
ELEMENT
INPUT
TERMINAL
*31*

FRAME
MEMORY
P(x,y)

*32*

P(x,y) x,y ARE ODD

P(x-1,y-1),P(x+1,y-1),
P(x-1,y+1),P(x+1,y+1),
P(x,y-2),P(x2,y)

P(x,y) x, y ARE EVEN

P(x-2,y-2),P(x,y-2),P(x+2,y-2),
P(x-2,y)

LOCAL DECODED PICTURE

*33*
HIGH LEVEL
PICTURE
ENCODER

*34*
MIDDLE LEVEL
PICTURE
ENCODER

*35*
LOW LEVEL
PICTURE
ENCODER

*39*
MULTIPLEXER

*36*
HIGH LEVEL
PICTURE LOCAL
DECODER

*37*
MIDDLE LEVEL
PICTURE LOCAL
DECODER

*38*
LOW LEVEL
PICTURE LOCAL
DECODER

*200*

*40*
HIERARCHICAL
CODE OUTPUT
TERMINAL

# FIG.12

## FIG.13

PICTURE ELEMENT TO BE
ENCODED IN HIGH LEVEL PICTURE

PICTURE ELEMENT TO BE
ENCODED IN MIDDLE LEVEL PICTURE

PICTURE ELEMENT TO BE
ENCODED IN LOW LEVEL PICTURE

HIGH LEVEL
PICTURE

MIDDLE LEVEL
PICTURE

LOW LEVEL
PICTURE

P(x,y−2)

P(x−1,y+1) P(x+1,y−1)

P(x−2,y) P(x,y)

P(x−1,y+1) P(x+1,y+1)

# FIG.14

P(x,y−1)

P(x−1,y−1) P(x+1,y−1)

P(x−1,y) P(x,y)

P(x+1,y)

P(x,y+1)

# FIG.15

P(x–2,y–2)   P(x,y–2)   P(x+2,y–2)

P(x–2,y)   P(x,y)

# FIG.16

REFERENCE PICTURE ELEMENT ------>

51 HIERARCHICAL CODE INPUT TERMINAL

52 DE-MULTIPLEXER

P(x,y-1),P(x-1,y),
P(x+1,y),P(x,y+1),
P(x-1,y-1),P(x+1,y-1)

53 HIGH LEVEL PICTURE DECODER

P(x,y) x+y IS ODD

P(x-1,y-1),P(x+1,y-1),
P(x-1,y+1),P(x+1,y+1),
P(x,y-2),P(x-2,y)

54 MIDDLE LEVEL PICTURE DECODER

P(x,y) x,y ARE ODD

P(x-2,y-2),P(x,y-2),
P(x+2,y-2),P(x-2,y)

55 LOW LEVEL PICTURE DECODER

P(x,y) x,y ARE EVEN

56 FRAME MEMORY

P(x,y)

○57 HIGH LEVEL PICTURE OUTPUT TERMINAL

○58 MIDDLE LEVEL PICTURE OUTPUT TERMINAL

○59 LOW LEVEL PICTURE OUTPUT TERMINAL

# FIG.17

35

ENCODED PICTURE ELEMENT — · —▶

REFERENCE PICTURE ELEMENT · · · · ·▶

MULTIPLEXER $\overset{73}{\frown}$

*63*

HIGH LEVEL PICTURE ENCODER

HIGH LEVEL PICTURE LOCAL DECODER $\overset{68}{\frown}$

$\overset{74}{}$ HIERARCHICAL CODE OUTPUT TERMINAL

P(x,y) x+y IS ODD

P(x,y−1),P(x−1,y),P(x+1,y),
P(x,y+1),P(x−1,y−1),P(x+1,y−1)

*64*

P(x,y) x,y ARE ODD

MIDDLE LEVEL PICTURE ENCODER

MIDDLE LEVEL PICTURE LOCAL DECODER $\overset{69}{\frown}$

PICTURE INPUT TERMINAL

*61*

P(x−1,y−1),P(x+1,y−1),P(x−1,y+1),
P(x+1,y+1),P(x,y−2),P(x−2,y)

*65*

P(x,y) x,y ARE EVEN,x/2+y/2 IS ODD

LOW-HIGH LEVEL PICTURE ENCODER

LOW-HIGH LEVEL PICTURE LOCAL DECODER $\overset{70}{\frown}$

FRAME MEMORY P(x,y)

P(x,y−2),P(x−2,y),P(x+2,y),
P(x,y+2),P(x−2,y−2),P(x+2,y−2)

*62*

*66*

P(x,y) x,y,x/2+y/2 ARE EVEN

LOW-MIDDLE LEVEL PICTURE ENCODER

LOW-MIDDLE LEVEL PICTURE LOCAL DECODER $\overset{71}{\frown}$

P(x−2,y−2),P(x+2,y−2),P(x−2,y+2),
P(x+2,y+2),P(x,y−4),P(x−4,y)

*67*

P(x,y) x,y,x/2,y/2 ARE EVEN

LOW-LOW LEVEL PICTURE ENCODER

LOW-LOW LEVEL PICTURE LOCAL DECODER $\overset{72}{\frown}$

P(x−4,y−4),P(x,y−4),P(x+4,y−4),
P(x−4,y)

LOCAL DECODED PICTURE

# FIG.18

EP 0 828 380 A2

PICTURE ELEMENT TO BE
ENCODED IN HIGH LEVEL PICTURE · HIGH LEVEL PICTURE

PICTURE ELEMENT TO BE
ENCODED IN MIDDLE LEVEL PICTURE · MIDDLE LEVEL PICTURE

PICTURE ELEMENT TO BE
ENCODED IN LOW-HIGH LEVEL PICTURE · LOW-HIGH LEVEL PICTURE

PICTURE ELEMENT TO BE
ENCODED IN LOW-MIDDLE LEVEL PICTURE · LOW-MIDDLE LEVEL PICTURE

PICTURE ELEMENT TO BE
ENCODED IN LOW-LOW LEVEL PICTURE · LOW-LOW LEVEL PICTURE

# FIG.19

FIG.20

FIG.21

P(x–2,y–2)

P(x,y–2)    P(x+2,y–2)

P(x–2,y)    P(x,y)    P(x+2,y)

P(x,y+2)

# FIG.22

EP 0 828 380 A2

DECODED PICTURE ELEMENT —— · ——▶

REFERENCE PICTURE ELEMENT ······▶

P(x,y−1),P(x−1,y),
P(x+1,y),P(x,y+1),
P(x−1,y−1),P(x+1,y−1)

*83*

**HIGH LEVEL
PICTURE
DECODER**

P(x,y) x+y IS ODD

*88*

P(x−1,y−1),P(x+1,y−1),
P(x−1,y+1),P(x+1,y+1),
P(x,y−2),P(x−2,y)

*84*

**MIDDLE
LEVEL
PICTURE
DECODER**

P(x,y) x,y ARE ODD

*81* HIERARCHICAL
CODE INPUT
TERMINAL

P(x,y−2),P(x−2,y),
P(x+2,y),P(x,y+2),
P(x−2,y−2),P(x+2,y−2)

*85*

**LOW-HIGH
LEVEL
PICTURE
DECODER**

**DE-
MULTIPLEXER**

P(x,y) x,y ARE EVEN,
x/2+y/2 IS ODD

**FRAME
MEMORY**

P(x,y)

P(x−2,y−2),P(x+2,y−2),
P(x−2,y+2),P(x+2,y+2),
P(x,y−4),P(x−4,y)

*86*

**LOW-MIDDLE
LEVEL
PICTURE
DECODER**

*82*

P(x,y) x,y ARE
x/2+y/2 IS EVEN

P(x−4,y−4),P(x,y−4),
P(x+4,y−4),P(x−4,y)

*87*

**LOW-LOW
LEVEL
PICTURE
DECODER**

P(x,y) x,y ARE
x/2,y/2 ARE EVEN

○*89* **HIGH LEVEL
PICTURE OUTPUT
TERMINAL**

○*90* **MIDDLE LEVEL
PICTURE OUTPUT
TERMINAL**

○*91* **LOW-HIGH LEVEL
PICTURE OUTPUT
TERMINAL**

○*92* **LOW-MIDDLE
LEVEL PICTURE
OUTPUT TERMINAL**

○*93* **LOW-LOW LEVEL
PICTURE OUTPUT
TERMINAL**

# FIG.23

ENCODED PICTURE ELEMENT ----►
REFERENCE PICTURE ELEMENT ----►

MULTIPLEXER — 121

HIERARCHICAL
CODE OUTPUT
TERMINAL
— 122

PICTURE
INPUT
TERMINAL
101

FRAME
MEMORY

P(x,y)

102

— 103  HIGH LEVEL PICTURE ENCODER
— 104  MIDDLE LEVEL PICTURE ENCODER
— 105  LOW-HIGH LEVEL PICTURE ENCODER
— 106  LOW-MIDDLE LEVEL PICTURE ENCODER
— 107  LOW-LOW-HIGH LEVEL PICTURE ENCODER
— 108  LOW-LOW-MIDDLE LEVEL PICTURE ENCODER
— 109  LOW-LOW-LOW-HIGH LEVEL PICTURE ENCODER
— 110  LOW-LOW-LOW-MIDDLE LEVEL PICTURE ENCODER
— 111  LOW-LOW-LOW-LOW LEVEL PICTURE ENCODER

HIGH LEVEL PICTURE LOCAL DECODER — 112
MIDDLE LEVEL PICTURE LOCAL DECODER — 113
LOW-HIGH LEVEL PICTURE LOCAL DECODER — 114
LOW-MIDDLE LEVEL PICTURE LOCAL DECODER — 115
LOW-LOW-HIGH LEVEL PICTURE LOCAL DECODER — 116
LOW-LOW-MIDDLE LEVEL PICTURE LOCAL DECODER — 117
LOW-LOW-LOW-HIGH LEVEL PICTURE LOCAL DECODER — 118
LOW-LOW-LOW-MIDDLE LEVEL PICTURE LOCAL DECODER — 119
LOW-LOW-LOW-LOW LEVEL PICTURE LOCAL DECODER — 120

LOCAL DECODED PICTURE

**FIG.24**

EP 0 828 380 A2

| x→ y↓ | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| 0 | 1 | 9 | 7 | 9 | 5 |   | 7 |   | 3 |   |   |   | 5 |   |   |   |
| 1 | 9 | 8 | 9 | 8 |   |   |   |   |   |   |   |   |   |   |   |   |
| 2 | 7 | 9 | 6 | 9 | 7 |   | 6 |   | 7 |   |   |   |   |   |   |   |
| 3 | 9 | 8 | 9 | 8 |   |   |   |   |   |   |   |   |   |   |   |   |
| 4 | 5 |   | 7 |   | 4 |   | 7 |   | 5 |   |   |   | 4 |   |   |   |
| 5 |   |   |   |   |   |   |   |   |   |   |   |   |   |   |   |   |
| 6 | 7 |   | 6 |   | 7 |   | 6 |   | 7 |   |   |   |   |   |   |   |
| 7 |   |   |   |   |   |   |   |   |   |   |   |   |   |   |   |   |
| 8 | 3 |   | 7 |   | 5 |   | 7 |   | 2 |   |   |   | 5 |   |   |   |
| 9 |   |   |   |   |   |   |   |   |   |   |   |   |   |   |   |   |
| 10 |   |   |   |   |   |   |   |   |   |   |   |   |   |   |   |   |
| 11 |   |   |   |   |   |   |   |   |   |   |   |   |   |   |   |   |
| 12 | 5 |   |   |   | 4 |   |   |   | 5 |   |   |   | 4 |   |   |   |
| 13 |   |   |   |   |   |   |   |   |   |   |   |   |   |   |   |   |
| 14 |   |   |   |   |   |   |   |   |   |   |   |   |   |   |   |   |
| 15 |   |   |   |   |   |   |   |   |   |   |   |   |   |   |   |   |

**FIG.25**

PICTURE ELEMENT TO BE ENCODED IN HIGH LEVEL PICTURE

PICTURE ELEMENT TO BE ENCODED IN MIDDLE LEVEL PICTURE

PICTURE ELEMENT TO BE ENCODED IN LOW-HIGH LEVEL PICTURE

PICTURE ELEMENT TO BE ENCODED IN LOW-MIDDLE LEVEL PICTURE

PICTURE ELEMENT TO BE ENCODED IN LOW-LOW-HIGH LEVEL PICTURE

PICTURE ELEMENT TO BE ENCODED IN LOW-LOW-MIDDLE LEVEL PICTURE

PICTURE ELEMENT TO BE ENCODED IN LOW-LOW-LOW-HIGH LEVEL PICTURE

PICTURE ELEMENT TO BE ENCODED IN LOW-LOW-LOW-MIDDLE LEVEL PICTURE

PICTURE ELEMENT TO BE ENCODED IN LOW-LOW-LOW-LOW LEVEL PICTURE

9 } HIGH LEVEL PICTURE

8 } MIDDLE LEVEL PICTURE

7 } LOW-HIGH LEVEL PICTURE

6 } LOW-MIDDLE LEVEL PICTURE

5 } LOW-LOW-HIGH LEVEL PICTURE

4 } LOW-LOW-MIDDLE LEVEL PICTURE

3 } LOW-LOW-LOW-HIGH LEVEL PICTURE

2 } LOW-LOW-LOW-MIDDLE LEVEL PICTURE

1 } LOW-LOW-LOW-LOW LEVEL PICTURE

REFERENCE PICTURE ELEMENT - - - - ➤

HIERARCHICAL
CODE INPUT
TERMINAL
*131*

*132*

DE-
MULTIPLEXER

HIGH LEVEL
PICTURE DECODER
*133*

MIDDLE LEVEL
PICTURE DECODER
*134*

LOW-HIGH LEVEL
PICTURE DECODER
*135*

LOW-MIDDLE LEVEL
PICTURE DECODER
*136*

LOW-LOW HIGH LEVEL
PICTURE DECODER
*137*

LOW-LOW-MIDDLE LEVEL
PICTURE DECODER
*138*

LOW-LOW-LOW-HIGH LEVEL
PICTURE DECODER
*139*

LOW-LOW-LOW-MIDDLE LEVEL
PICTURE DECODER
*140*

LOW-LOW-LOW-LOW LEVEL
PICTURE DECODER
*141*

*142*

FRAME
MEMORY

$P(x, y)$

○*143* HIGH LEVEL PICTURE
OUTPUT TERMINAL

○*144* MIDDLE LEVEL PICTURE
OUTPUT TERMINAL

○*145* LOW-HIGH LEVEL PICTURE
OUTPUT TERMINAL

○*146* LOW-MIDDLE LEVEL PICTURE
OUTPUT TERMINAL

○*147* LOW-LOW-HIGH LEVEL
PICTURE OUTPUT TERMINAL

○*148* LOW-LOW-MIDDLE LEVEL
PICTURE OUTPUT TERMINAL

○*149* LOW-LOW-LOW-HIGH LEVEL
PICTURE OUTPUT TERMINAL

○*150* LOW-LOW-LOW-MIDDLE LEVEL
PICTURE OUTPUT TERMINAL

○*151* LOW-LOW-LOW-LOW LEVEL
PICTURE OUTPUT TERMINAL

## FIG.26

EP 0 828 380 A2

44

```
. a .          a . c
b x c          . x .
. d .          b . d
```

# FIG.27(a)    FIG.27(b)

```
. . . . .        . . . f . . .
. e a f .        . . . f . . .
. b x c .        . . a . c . h
g . d . h        . e . x . . .
. i . j .        . . b . d . j
                 . . . . . . .
                 . . g . i . .
```

# FIG.27(c)    FIG.27(d)

```
. k . l .        . . . . . . .
m . a . n        . . l . n . .
. b x c .        k . a . c . h
g . d . h        . . . x . . .
. i . j .        m . b . d . j
                 . . . . . . .
                 . . g . i . .
```

# FIG.27(e)    FIG.27(f)

x :  PICTURE ELEMENT TO BE INTERPOLATED

a-n : PICTURE ELEMENT FOR USE IN INTERPOLATION

**FIG.28**

EP 0 828 380 A2

**FIG.29**

**FIG.30A**

```
1 . . . 1 . . . 1 . . . 1 . . . 1 . . 0
. . . . . . . . . . . . . . . . . . . .
. . . . . . . . . . . . . . . . . . . .
. . . . . . . . . . . . . . . . . . . .
1 . . . 1 . . . 1 . . . 0 . . . 0 . . . 0
. . . . . . . . . . . . . . . . . . . .
. . . . . . . . . . . . . . . . . . . .
1 . . . 0 . . . 0 . . . 0 . . . 0 . . . 0
```

**FIG.30B**

```
1 . . . 1 . . . 1 . . . 1 . . . 1 . . 0
. . . . . . . . . . . . . . . . . . . .
. . 1 . . . 1 . . . 1 . . . 1 . . . 0 . .
1 . . . 1 . . . 1 . . . 0 . . . 0 . . . 0
. . 1 . . . 1 . . . 0 . . . 0 . . . 0 . .
1 . . . 0 . . . 0 . . . 0 . . . 0 . . . 0
```

**FIG.30C**

```
1 . 1 . 1 . 1 . 1 . 1 . 1 . 1 . 1 . 1 . 0
. . . . . . . . . . . . . . . . . . . .
1 . 1 . 1 . 1 . 1 . 1 . 1 . 1 . 0 . 0 . 0
1 . 1 . 1 . 1 . 1 . 1 . 0 . 0 . 0 . 0 . 0
. . . . . . . . . . . . . . . . . . . .
1 . 1 . 1 . 1 . 0 . 0 . 0 . 0 . 0 . 0 . 0
. . . . . . . . . . . . . . . . . . . .
1 . 0 . 0 . 0 . 0 . 0 . 0 . 0 . 0 . 0 . 0
```

**FIG.30D**

```
1 . 1 . 1 . 1 . 1 . 1 . 1 . 1 . 1 . 1 . 0
. 1 . 1 . 1 . 1 . 1 . 1 . 1 . 1 . 1 . 0 .
1 . 1 . 1 . 1 . 1 . 1 . 1 . 1 . 0 . 0 . 0
. 1 . 1 . 1 . 1 . 1 . 1 . 1 . 0 . 0 . 0 .
1 . 1 . 1 . 1 . 1 . 1 . 0 . 0 . 0 . 0 . 0
. 1 . 1 . 1 . 1 . 1 . 0 . 0 . 0 . 0 . 0 .
1 . 1 . 1 . 1 . 0 . 0 . 0 . 0 . 0 . 0 . 0
. 1 . 1 . 1 . 0 . 0 . 0 . 0 . 0 . 0 . 0 .
1 . 1 . 0 . 0 . 0 . 0 . 0 . 0 . 0 . 0 . 0
```

**FIG.30E**

```
1 1 1 1 1 1 1 1 1 1 1 1 1 1 1 1 1 1 1 0
1 1 1 1 1 1 1 1 1 1 1 1 1 1 1 1 1 0 0 0
1 1 1 1 1 1 1 1 1 1 1 1 1 1 1 0 0 0 0 0
1 1 1 1 1 1 1 1 1 1 1 1 1 0 0 0 0 0 0 0
1 1 1 1 1 1 1 1 1 1 1 1 0 0 0 0 0 0 0 0
1 1 1 1 1 1 1 1 1 0 0 0 0 0 0 0 0 0 0 0
1 1 1 1 1 1 1 1 0 0 0 0 0 0 0 0 0 0 0 0
1 1 1 1 1 1 0 0 0 0 0 0 0 0 0 0 0 0 0 0
1 1 1 1 0 0 0 0 0 0 0 0 0 0 0 0 0 0 0 0
```

PICTURE ELEMENT OF
HIGH LEVEL PICTURE

PICTURE ELEMENT OF
MIDDLE LEVEL PICTURE

PICTURE ELEMENT OF
LOW LEVEL PICTURE

# FIG.31

PICTURE ELEMENT OF
HIGH LEVEL PICTURE

PICTURE ELEMENT OF
MIDDLE LEVEL PICTURE

PICTURE ELEMENT OF
LOW-HIGH LEVEL PICTURE

PICTURE ELEMENT OF
LOW-MIDDLE LEVEL PICTURE

PICTURE ELEMENT OF
LOW-LOW LEVEL PICTURE

# FIG.32